# EUROPÄISCHE PATENTSCHRIFT

(11) **EP 0 989 904 B1**
(45) Veröffentlichungstag und Bekanntmachung des Hinweises auf die Patenterteilung: **11.09.2002**
(21) Anmeldenummer: 98928340.3
(22) Anmeldetag: 02.06.1998
(51) Int. Cl.: B01D 63/02, B01D 69/08, B01D 53/22, B01D 15/08, B01D 61/00, B01J 20/28, B01J 20/32, B01J 35/06

(54) **MEMBRANMODUL MIT EINSEITIG EINGEBETTETEN HOHLFASERMEMBRANEN**
MEMBRANE MODULE WITH UNILATERALLY EMBEDDED HOLLOW FIBER MEMBRANES
MODULE MEMBRANAIRE A MEMBRANES EN FIBRES CREUSES ENROBEES D'UN COTE

(30) Priorität: 14.06.1997 DE 19725199
(43) Veröffentlichungstag der Anmeldung: 05.04.2000
(73) Patentinhaber: MAT Adsorption Technologies GmbH & Co. KG, 63784 Obernburg (DE)
(72) Erfinder: BAURMEISTER, Ulrich, D-42115 Wuppertal (DE); WOLLBECK, Rudolf, D-63906 Erlenbach (DE)
(74) Vertreter: Fett, Günter
(86) Internationale Anmeldenummer: EP9803262
(87) Internationale Veröffentlichungsnummer: WO98057733

(56) Entgegenhaltungen:
- EP-A- 0 569 229
- EP-A- 0 610 755
- EP-A- 0 732 142
- US-A- 4 002 567
- US-A- 4 547 289
- US-A- 5 332 498

## Beschreibung

Die Erfindung betrifft einen Membranmodul zur stoffspezifischen Behandlung eines Fluids, enthaltend
a) ein Gehäuse mit einer Längserstreckung,
b) darin im wesentlichen in Richtung der Längserstreckung des Gehäuses angeordnet ein Bündel aus Hohlfasermembranen mit semipermeabler Wand, die eine poröse Struktur aufweist, wobei jede Hohlfasermembran ein erstes und ein zweites Ende und mindestens ein sich entlang ihrer Längsachse erstreckendes Lumen aufweist, wobei jede Hohlfasermembran lediglich an ihrem ersten Ende mittels einer Vergußmasse in das Gehäuse eingebettet und an ihrem zweiten Ende im wesentlichen frei umströmbar ist, und wobei die Hohlfasermembranen von einem durch die Innenwand des Gehäuses und durch die Vergußmasse begrenzten Außenraum umgeben sind und jeweils eine Innenseite, die ihrem mindestens einen Lumen zugewandt ist, sowie eine Außenseite, die dem Außenraum zugewandt ist, aufweisen,
c) mindestens eine Einlaßeinrichtung zum Einleiten des zu behandelnden Fluids in das Gehäuse auf lediglich eine der beiden Seiten (Innen- oder Außenseite) der Hohlfasermembranen,
d) eine Auslaßeinrichtung zum Ableiten des behandelten Fluids aus dem Gehäuse, wobei die Auslaßeinrichtung zum Außenraum um die Hohlfasermembranen hin geöffnet ist.

Stoffspezifische Behandlungen von Fluiden gewinnen in zunehmendem Maße an Bedeutung in Anwendungsgebieten wie der Biotechnologie, der Medizin oder der chemischen Technologie. Unter Fluiden sind dabei Gase, Gasgemische sowie allgemein Flüssigkeiten wie z.B. Proteinlösungen, vorfiltrierte Suspensionen oder klare Lösungen zu subsummieren. Ein Beispiel für eine stoffspezifische Behandlung ist die Gewinnung von Wirkstoffen aus Zellsuspensionen, in denen genmodifizierte Zellen Stoffe wie Antikörper, Hormone, Wachstumsfaktoren oder Enzyme in meist kleinen Konzentrationen produziert haben. Eine wichtige Anwendung ist auch die extrakorporale Entfernung von unerwünschten Substanzen aus dem menschlichen Blutplasma sowie die Gewinnung von Komponenten wie z.B. Immunglobulinen oder Gerinnungsfaktoren aus gespendetem Blutplasma. Schließlich ist eine breite Anwendung auch die katalytische oder biokatalytische - enzymatische - Behandlung von Flüssigkeiten wie z.B. die Hydrolyse von Ölen durch Lipasen, die an einer Matrix immobilisiert sind.

Die stoffspezifische Behandlung von Fluiden erfolgt vielfach derart, daß das zu behandelnde Fluid mit einem Trägermaterial in Kontakt gebracht wird, auf und/oder in dem wechselwirkende Gruppen oder Substanzen immobilisiert sind, die in spezifischer, selektiver Weise mit der in dem Fluid enthaltenen Zielsubstanz, d.h. der Substanz, auf die die stoffspezifische Behandlung ausgerichtet ist, wechselwirken. Solche Wechselwirkungen können beispielsweise Kationen- oder Anionenaustausch, Hydrophil-Hydrophob-Wechselwirkung, Wasserstoffbrückenbildung, Affinität oder enzymatische oder katalytische Reaktionen und dergleichen sein. Bei der affinen Stofftrennung, wie z.B. der Affinitätschromatographie, sind an das Trägermaterial Liganden gekoppelt oder im Trägermaterial immobilisiert, die die Funktion haben, eine einzelne Zielsubstanz oder auch eine ganze Klasse von Substanzen adsorptiv spezifisch zu binden. Diese Zielsubstanz wird als Ligat bezeichnet. Ein Beispiel für klassenspezifische Liganden sind positiv geladene Diethylaminoethyl(DEAE)-Gruppen oder negativ geladene Sulfonsäure(SO₃)-Gruppen, die die Klasse der positiv geladenen bzw. negativ geladenen Moleküle adsorbieren. Spezifische Liganden sind z.B. Antikörper gegen ein bestimmtes Protein, das als Ligat an den Antikörper gebunden wird.

Wesentliche Kriterien bei der stoffspezifischen Behandlung von Fluiden sind Produktivität und Selektivität. Mit Blick auf die Produktivität ist es wichtig, daß möglichst viele stoffspezifisch wirkende Gruppen pro Volumeneinheit zur Verfügung stehen, die mit der in dem zu behandelnden Fluid enthaltenen Zielsubstanz in Wechselwirkung treten können. Gleichzeitig ist eine Maximierung des Transports der Zielsubstanz zu den stoffspezifisch wirkenden Gruppen bzw. Substanzen anzustreben.

Ein in der Affinitätschromatographie häufig eingesetztes Trägermaterial für Liganden sind Sepharosepartikel, die in Form einer Schüttung in einer Chromatographiesäule vorliegen. Wenngleich sich hierbei eine hohe Konzentration an Liganden mit hoher Selektivität realisieren läßt, ist die Produktivität wegen der hohen Druckverluste der Partikelsäulen und der Kompressibilität der Sepharosepartikel bekanntermaßen gering. Darüberhinaus ist der Zugang der Ligaten zu den in den Sepharosepartikeln enthaltenen Liganden diffusionskontrolliert, wodurch insbesondere bei der Abtrennung von größeren Molekülen wie z.B. von Proteinen aufgrund geringer Diffusionsgeschwindigkeiten lange Verweilzeiten und damit nur geringe Durchsätze und geringe Produktivitäten resultieren.

Verbesserte Chromatographie-Säulenmaterialien aus starren, porösen Partikeln, die konvektiv durchströmt werden können, werden in der US-A-5 019 270 beschrieben. Diese Partikel erlauben gegenüber dem zuvor genannten Säulenmaterial eine Reduzierung der Verweilzeit und eine Steigerung der Produktivität. Dennoch weisen auch mit diesen Partikeln gefüllte Chromatographie-Säulen bei größeren Säulendurchmessern eine ungleichförmige Durchströmung auf, die sich negativ in bezug auf eine gleichmäßige Nutzung aller in der Chromatographiesäule vorhandenen Liganden auswirkt. Ferner wird die technische Beherrschung der erforderlichen Drücke mit größeren Durchmessern zunehmend aufwendiger.

Die geschilderten Nachteile partikelförmiger Trägermaterialien führten zur Entwicklung einer Reihe von Verfahren zur stoffspezifischen Behandlung von Fluiden unter Verwendung von porösen, semipermeablen Membranen. Aufgrund ihrer porösen Struktur stellen Membranen eine große innere Oberfläche zur Verfügung, so daß an die Membranen in einer hohen Konzentration pro Volumeneinheit eine große Anzahl von funktionellen Gruppen gekoppelt werden kann, die in Wechselwirkung mit den die Membran durchströmenden, zu behandelnden Fluiden treten (s. z.B. E. Klein, "Affinity Membranes", John Wiley & Sons, Inc., 1991; S. Brandt u. a., "Membrane-Based Affinity Technology for Commercial Scale Purifications", Bio/Technology Vol. 6 (1988), S. 779-782).

Es stehen Membranen aus unterschiedlichsten Materialien und mit unterschiedlichen Porenstrukturen zur Verfügung, so daß eine Anpassung an die physikochemischen Eigenschaften der zu behandelnden Fluide und ein konvektiver Transport des zu behandelnden Fluids z.B. mit einer in ihm enthaltenen Zielsubstanz durch die Membran möglich ist. Darüberhinaus zeichnen sich Membranen aufgrund ihrer in der Regel nur geringen Wanddicke (z.B. <100 µm) durch kurze Transportwege des zu behandelnden Fluids z.B. zu in den Membranen immobilisierten, wechselwirkenden Gruppen aus, wodurch die Verweilzeiten vergleichsweise kurz, die Druckverluste gering, die linearen Flußgeschwindigkeiten und damit die Bindungsraten hoch sind.

Es sind eine Reihe von solche Membranen enthaltenden Modulen beschrieben, die bei Verfahren zur stoffspezifischen Behandlung von Fluiden verwendet werden. Dabei ist zwischen dem sogenannten dead-end-Modus bzw. den dead-end-Modulen und dem cross-flow-Modus bzw. den cross-flow-Modulen zu unterscheiden.

Bei der Fahrweise im cross-flow-Modus fließt der Feedstrom parallel zur einen Seite der Membran. Dabei tritt ein Teil des Feedstroms durch die Membran hindurch. Der hindurchgetretene Teilstrom wird als Permeat, der auf der Feedstromseite verbleibende Teilstrom als Retentat abgeleitet. Hierbei kann auch auf der Permeatseite der Membran ein zusätzlicher Fluidstrom eingeleitet werden, der den durch die Membran hindurchgetretenen Teilstrom aufnimmt.

Beim dead-end-Modus hingegen wird das gesamte, als Feedstrom in den Membranmodul einströmende Fluid durch die Membran hindurchgeführt und auf der der Einströmseite der Membran gegenüberliegenden Abströmseite als Filtrat bzw. Permeat abgeleitet.

Dead-end-Membranmodule auf Basis von Hohlfasermembranen werden vielfach für Anwendungen im Bereich der Ultra- oder Mikrofiltration und oftmals z.B. zur Begasung von Flüssigkeiten eingesetzt. Bei einem Teil dieser Membranmodule, wie sie z.B. in der EP-A-0 138 060 oder der EP-A-0 659 468 beschrieben werden, sind die Hohlfasermembranen U-förmig gebogen und ihre Enden gemeinsam in einer Vergußmasse eingebettet und geöffnet. Das Gas bzw. die zu filtrierende Flüssigkeit strömt beispielsweise über die offenen Enden in die Lumina der Hohlfasermembranen ein und permeiert aufgrund der anliegenden Druckdifferenz in den Außenraum um die Hohlfasermembranen. Bei Filtrationsanwendungen verbleibt dann die abfiltrierte Komponente in der Membran.

In einer anderen Ausführung von dead-end Membranmodulen sind die Hohlfasermembranen im wesentlichen geradlinig im Gehäuse angeordnet und mit ihrem einen, geöffneten Ende gemeinsam in eine Vergußmasse eingebettet , wohingegen ihr zweites Ende frei, d.h. nicht eingebettet ist. Das nicht eingebettete Ende der Hohlfasermembranen ist bei diesen Modulen geschlossen. Derartige Membrarimodule sind beispielsweise in US-A-4 002 567, US-A-4 547 289, EP-A-0 138 060 oder EP-A-0 732 142 beschrieben.

Bei allen dead-end-Membranmodulen ist von Nachteil, daß sie für die Behandlung z.B. von Suspensionen dann oft nicht geeignet sind, wenn die Größe der in der Suspension enthaltenen Teilchen in der Größenordnung der Porendurchmesser liegen. Die Teilchen würden zum Aufbau einer Schicht auf der Membranwand führen und die Membran blockieren. Für die Anwendung bei z.B. Affinitätstrennverfahren für Suspensionen können derartige dead-end-Module nur in Kombination mit einer vorgeschalteten Vorreinigungsstufe betrieben werden. Hierdurch verliert ein solches Verfahren jedoch an Effizienz, etwa auch dadurch, daß in vielen Fällen durch eine solche Vorreinigung ein Großteil der Zielsubstanz verloren geht.

Die genannten Nachteile im dead-end-Modus betriebener Module in Bezug z.B. auf ihre Verwendbarkeit bei Suspensionen können zumindest teilweise bei Einsatz von cross-flow-Modulen vermieden werden. Bei diesen läßt sich durch den parallel zur Membranoberfläche strömenden Feedstrom bei genügend hohen Scherbeanspruchungen der Aufbau einer Schicht aus suspendierten Teilchen verringern.

Die WO 90/05018 offenbart einen cross-flow Modul mit Hohlfasermembranen zum Einsatz bei Affinitätstrennverfahren. Bei diesem wird eine ligathaltige Flüssigkeit über eine Einlaßeinrichtung in das Modulgehäuse eingeleitet und strömt tangential entlang einer Seite der Hohlfasermembranen, in und an der die Liganden gekoppelt sind. Ein Teil der Flüssigkeit permeiert durch die Membran hindurch, wobei die Ligaten an die Liganden angelagert werden, und tritt auf der der Eintrittsseite gegenüberliegenden Membranseite als Permeatstrom aus. Über getrennte Auslaßeinrichtungen werden Retentatstrom und Permeatstrom abgeleitet.

Eine Abwandlung eines cross-flow-Prozesses wird in der WO 93/02777 beschrieben. Zur spezifischen Entfernung von Komponenten aus dem Blut dient ein Plasmafilter aus U-förmig gebogenen und an ihren Enden in ein speziell ausgeformtes Gehäuse eingebetteten Hohlfasermembranen. Die Hohlfasermembranen werden lumenseitig vom Blut durchströmt, die stoffspezifische Behandlung erfolgt an dem mittels der Membran abgetrennten Blutplasma im Außenraum um die Hohlfasermembranen im Gehäuse, in dem sich ein Reinigungsmedium befindet. Das Bündel läßt sich in einen Einströmast und in einen Ausströmast unterteilen. Aufgrund des im Bereich des Einströmasts auftretenden positiven Transmembrandrucks erfolgt ein konvektiver Transport von Blutplasma durch die Membran in den Außenraum. Im Bereich des Ausströmasts strömt das behandelte Plasma aufgrund des dort auftretenden negativen Transmembrandrucks in das Lumen der Hohlfasermembranen zurück und wird wieder mit dem Blut vereinigt.

In der EP-A-0 341 413 wird ein Adsorbermodul zur Behandlung von Vollblut beschrieben, bei dem die im Modul enthaltenen, an ihren beiden Enden in Vergußmassen eingebetteten und mit Liganden versehenen Hohlfasermembranen im cross-flow-Modus lumenseitig vom Blut durchströmt werden. Hierbei tritt Plasma als Permeat durch die Hohlfasermembranwand in den die Hohlfasermembranen umschließenden Außenraum, wobei in der Membranwand die Behandlung des Plasmas erfolgt. In einer speziellen Ausführungsform besitzt dieser Modul keinen Auslaß für das Permeat, sondern das als Permeat abgetrennte Plasma sammelt sich im Außenraum um die Kapillaren und tritt infolge der sich einstellenden Druckverhältnisse wieder durch die Hohlfasermembranwandung in das Lumen der Hohlfasermembran ein. Aufgrunddessen, daß bei einem solchen Modulkonzept der Permeatstrom zweimal durch die Membranwand hindurchtreten muß, ist dieser Permeatstrom und damit der der stoffspezifischen Behandlung unterzogene Anteil des Plasmas relativ klein. Hieraus resultiert auch daß die erforderlichen Behandlungszeiten relativ lang sind.

Die beschriebenen, im cross-flow-Modus betriebenen Module weisen verschiedene Nachteile auf. So sind bei getrennten Permeatund Retentatströmen zusätzliche Pumpen und/oder Kontrollorgane erforderlich. Ferner sind die Module durch die beidseitige Einbettung der Hohlfasermembranen an deren Enden aufwendig in der Fertigung, und es nimmt aufgrund der Einbettungen bei geringeren Modullängen in steigendem Maße der Anteil der Membranen zu, der im Hinblick auf die stoffspezifische Behandlung ohne Funktion ist. Da bei cross-flow Modulen nur ein Teilstrom des insgesamt zu behandelnden Fluids durch die Membran geleitet wird, ist oft eine Hintereinanderschaltung mehrerer Module erforderlich. Dann erhöht sich jedoch der Aufwand für Fertigung und Betrieb der cross-flow Module nach dem Stand der Technik erheblich.

Es ist daher Aufgabe der Erfindung, einen Membranmodul der eingangs genannten Art zur stoffspezifischen Behandlung von Fluiden zur Verfügung zu stellen, bei dem die genannten Nachteile des Standes der Technik zumindest reduziert sind, der in einfacher Weise herstellbar ist, flexibel an die jeweilige Fluidbehandlung angepaßt werden kann und insbesondere auch für Suspensionen geeignet ist.

Es ist des weiteren Aufgabe der Erfindung, ein Verfahren zur effizienten stoffspezifischen Behandlung von Fluiden unter Verwendung von semipermeablen Membranen mit poröser Struktur bereitzustellen, bei dem die oben genannten Nachteile zumindest reduziert sind.

Die Aufgabe wird bei einem Membranmodul gemäß Oberbegriff des Anspruchs 1 dadurch gelöst, daß die Lumina der Hohlfasermembranen an deren zweiten Enden geöffnet sind und in den Außenraum münden, und wobei an die Membranen eine große Anzahl von funktionellen Gruppen gekoppelt sind, die im Wechselwirkung mit dem die Membran durch Strömenden, zu behandelnden Fluiden treten.

Die Aufgabe wird desweiteren durch ein Verfahren zur stoffspezifischen Behandlung eines Fluids unter Verwendung dieses Membranmoduls gelöst, wobei die Hohlfasermembranen eine Innenseite, die ihrem mindestens einen Lumen zugewandt ist, sowie eine Außenseite, die dem Außenraum zugewandt ist, aufweisen, welches Verfahren mindestens folgende Schritte umfaßt:
a) Einleiten des zu behandelnden Fluids in das Gehäuse,
b) Vorbeileiten des zu behandelnden Fluids als Primärstrom an einer der Seiten der Hohlfasermembranen derart, daß ein Teil dieses Primärstroms als Permeatstrom über diese eine Seite in die Wand der Hohlfasermembranen einströmt, durch die Wand zur jeweils anderen Seite hindurchströmt, wobei an dem den Permeatstrom bildenden Teil des zu behandelnden Fluids die stoffspezifische Behandlung des Fluids erfolgt, und anschließend durch die andere Seite aus der Wand herausströmt,
c) Zusammenführen des durch die Wand der Hohlfasermembranen hindurchgeströmten Permeatstroms nach der stoffspezifischen Behandlung mit dem an der einen Seite der Hohlfasermembranen strömenden Primärstrom,
d) Ausleiten des aus Primärstrom und Permeatstrom zusammengeführten Strom des behandelten Fluids aus dem Gehäuse.

Zu behandelnde Fluide sind generell solche Fluide, die bestimmte Stoffe oder Zielsubstanzen enthalten, auf die die stoffspezifische Behandlung ausgerichtet ist.

Beim erfindungsgemäßen Membranmodul bzw. bei der Durchführung des erfindungsgemäßen Verfahrens zur stoffspezifischen Fluidbehandlung erfolgt die Anströmung der Hohlfasermembranen in einem Cross-flow-Modus: Das zu behandelnde Fluid strömt als Primärstrom entlang einer der beiden Seiten der Hohlfasermembranen, d.h. der entlang ihrer ihrem mindestens einen Lumen zugewandten Seite oder ihrer dem Außenraum zugewandten Seite, im wesentlichen parallel zu ihrer Längserstreckung, und ein Teil des zu behandelnden Fluids strömt als Permeat durch die Wände der Hohlfasermembranen zur jeweils anderen Hohlfasermembranseite. Hierbei wird unter dem Lumen der Hohlfasermembranen der von ihrer Wand umschlossene und sich in Richtung ihrer Längsachse erstreckende Hohlraum im Hohlfasermembran-Inneren verstanden und die dem mindestens einen Lumen der Hohlfasermembranen zugewandte Seite als Innenseite bzw. die dem Außenraum zugewandte Seite als Außenseite der Hohlfasermembranen bezeichnet. Dabei können die Hohlfasermembranen auch mehr als einen durchgehenden, sich längs der Hohlfaserachse erstreckenden Hohlraum, d.h. mehr als ein Lumen aufweisen. Derartige Hohlfasermembranen werden beispielsweise in der DE-OS 30 22 313 oder der DE-OS 28 42 835 beschrieben.

Um entsprechend große Fluidmengen stoffspezifisch behandeln zu können, umfaßt das im Gehäuse enthaltene Bündel mehrere nebeneinander angeordnete Hohlfasermembranen. Im Grenzfall kann das Bündel jedoch auch aus einer einzelnen Hohlfasermembran bestehen. Natürlich kann das Bündel auch aus mehreren Teilbündeln zusammengesetzt sein.

Entsprechend einer bevorzugten Ausführungsform des erfindungsgemäßen Membranmoduls mündet die mindestens eine Einlaßeinrichtung in den Außenraum und ist zur Vergußmasse benachbart. Vorteilhafterweise sind dabei die Lumina der Hohlfasermembranen an deren eingebettetem Ende geschlossen.

Bei einer weiteren vorteilhaften Ausführungsform des erfindungsgemäßen Membranmoduls steht die mindestens eine Einlaßeinrichtung mit einem Verteilerraum in Verbindung, der stirnseitig zur Vergußmasse benachbart ist und durch die Vergußmasse räumlich vom Außenraum getrennt ist. Hierbei steht der Verteilerraum gemäß einer bevorzugten Ausgestaltung über in die Vergußmasse eingebrachte Durchlässe mit dem Außenraum in Verbindung, und die Lumina der Hohlfasermembranen sind an deren eingebettetem ersten Enden geschlossen. Im einfachsten Fall handelt es sich bei diesen Durchlässen um durch die Vergußmasse hindurchtretende Löcher. Vorteilhafterweise sind die Durchlässe jedoch als fluiddurchlässige Elemente ausgebildet, die zusammen mit den Hohlfasermembranen in die Vergußmasse eingebettet sind, wobei besonders gute Erfahrungen mit derartigen Elementen in Form von Kapillaren oder Röhrchen gemacht wurden.

Bei den zuvor genannten Ausführungsformen des erfindungsgemäßen Membranmoduls wird das zu behandelnde Fluid in den Außenraum um die Hohlfasermembranen eingeleitet. Die Auslaßeinrichtung befindet sich in diesem Fall zweckmäßigerweise im Bereich des zweiten Endes der Hohlfasermembranen, d.h. an dem der Vergußmasse abgewandten Ende des Gehäuses. Dadurch durchströmt das zu behandelnde Fluid als Primärstrom den Außenraum um die Hohlfasermembranen im wesentlichen entlang der Längserstreckung der Hohlfasermembranen in Richtung auf die Auslaßeinrichtung. In diesen Fällen wird durch den Außenraum um die Hohlfasermembranen ein Kanalsystem für den Primärstrom ausgebildet.

Aufgrund des bei der Durchströmung dieses Kanalsystems entstehenden Druckgefälles strömt ein Teil des Primärstroms im wesentlichen über die gesamte Erstreckung der Hohlfasermembranen als Permeat durch deren semipermeable, poröse Wand. Hierbei erfolgt an diesem Teilstrom die stoffspezifische Behandlung. Anschließend tritt der stoffspezifisch behandelte Teilstrom in die Lumina der Hohlfasermembranen, die hier als Sammelraum für das Permeat dienen. Die Lumina bzw. den Sammelraum verläßt der Permeatstrom über die Öffnungen am zweiten Ende der Hohlfasermembranen und vereinigt sich mit dem das Kanalsystem durchströmenden Primärstrom, bevor der aus Primärstrom und Permeat vereinigte Strom als behandeltes Fluid über die Auslaßeinrichtung aus dem Gehäuse ausgeleitet wird.

Bei einer ebenfalls bevorzugten Ausführungsform des erfindungsgemäßen Membranmoduls steht die mindestens eine Einlaßeinrichtung ebenfalls mit einem Verteilerraum in Verbindung, der stirnseitig zur Vergußmasse benachbart ist und durch die Vergußmasse räumlich vom Außenraum getrennt ist. Jedoch treten die Hohlfasermembranen bei dieser Ausführungsform mit ihrem ersten Ende, d.h. mit ihrem eingebetteten Ende, durch die Vergußmasse hindurch und sind an diesem Ende geöffnet. In diesem Fall strömt das zu behandelnde Fluid als Primärstrom über die Einlaßeinrichtung des Gehäuses in den Verteilerraum und von diesem in die Lumina der Hohlfasermembranen ein, durchströmt diese in ihrer Längserstreckung und verläßt sie über ihre Öffnung am zweiten, nicht eingebetteten Ende der Hohlfasermembranen. Der Primärstrom durchströmt die Hohlfasermembranen also lumenseitig, wobei in diesem Fall die Gesamtheit der Lumina der Hohlfasermembranen das Kanalsystem für den Primärstrom ausbilden.

Aufgrund des bei der Durchströmung der Lumina entstehenden Druckgefälles strömt ein Teil des Primärstroms im wesentlichen über die gesamte Erstreckung der Hohlfasermembranen als Permeat durch deren semipermeable, poröse Wand. Hierbei erfolgt an diesem Teilstrom die stoffspezifische Behandlung. Anschließend tritt der stoffspezifisch behandelte Teilstrom in den die Hohlfasermembranen umgebenden Außenraum aus, der bei dieser Ausführungsform als Sammelraum für das Permeat dient. Diesen Außenraum durchströmt der Permeatstrom in Richtung auf die Auslaßeinrichtung des Gehäuses und vereinigt sich dabei im Außenraum innerhalb des Gehäuses mit dem aus dem Kanalsystem, d.h. den Lumina ausströmenden Primärstrom. Das behandelte Fluid, d.h. der aus Primärstrom und Permeat vereinigte Fluidstrom wird über die Auslaßeinrichtung aus dem Gehäuse abgeleitet. Hierbei kann sich bei der genannten Ausführungsform die Auslaßeinrichtung an verschiedenen Positionen entlang des Gehäuses befinden, vorzugsweise befindet sie sich jedoch in der Nähe der Vergußmasse.

In einer weiteren bevorzugten Ausführungsform weist der erfindungsgemäße Membranmodul mindestens eine Einlaßeinrichtung auf, die in den Außenraum mündet und zur Vergußmasse benachbart ist, und mindestens eine Einlaßeinrichtung, die mit einem Verteilerraum in Verbindung steht, der stirnseitig zur Vergußmasse benachbart ist und durch die Vergußmasse räumlich vom Außenraum getrennt ist, wobei dieser Verteilerraum mit den Lumina der Hohlfasermembranen in Verbindung steht, die mit ihrem ersten Ende durch die Vergußmasse hindurchtreten und an diesem Ende geöffnet sind. Hierduch wird es insbesondere möglich, im Wechsel ein Fluid als Primärstrom lumenseitig durch die Hohlfasermembranen und ein Fluid als Primärstrom außenseitig durch den Außenraum strömen zu lassen.

So kann beispielsweise bei der stoffspezifischen Behandlung eines Fluids zur Entfernung bestimmter im Fluid enthaltener Zielsubstanzen z.B. über Adsorption an geeignete Gruppen in der Membran zunächst das zu behandelnde Fluid als Primärstrom die Hohlfasermembranen lumenseitig durchströmen, wobei wie beschrieben ein Teilstrom als Permeat die Wände der Hohlfasermembranen von innen nach außen durchströmt. Nach Abschluß der stoffspezifischen Behandlung kann dann zur Elution der an den Membranen adsorbierten Zielsubstanzen ein Elutionsfluid als Primärstrom die Hohlfasermembranen außenseitig umströmen, wobei ein Teilstrom als Permeat die Wände der Hohlfasermembranen von außen nach innen durchströmt und dabei die Zielsubstanzen aufnimmt. Natürlich ist auch die umgekehrte Fahrweise möglich, d.h. Einleiten des zu behandelnden Fluid in den Außenraum und anschließendes Einleiten des Elutionsfluids in die Lumina der Hohlfasermembranen.

Eine solche Ausführungsform, bei der im Wechsel zunächst ein Fluid als Primärstrom auf der einen Seite der Hohlfasermembranen und anschließend ein weiteres Fluid als Primärstrom auf der anderen Seite der Hohlfasermembran strömen kann, läßt sich vorteilhaft auch bei der stoffspezifischen Behandlung von Suspensionen einsetzen, wenn sich in der Suspension enthaltene Teilchen in oder auf der Porenstruktur der Hohlfasermembranen absetzen können. In einem ersten Verfahrensschritt wird zunächst der Primärstrom in den erfindungsgemäßen Membranmodul auf die einen Seite der Hohlfasermembranen eingeleitet, wobei mit dem Permeatstrom Teilchen entsprechender Größe in die Porenstruktur eingeschwemmt oder auf die Porenstruktur der Membran angeschwemmt werden können. In einem nachfolgenden Schritt wird dann der Primärstrom oder ein zweites Fluid auf die andere Seite der Hohlfasermembranen als Primärstrom eingeleitet, und es bildet sich aufgrund der herrschenden Druckverhältnisse ein Permeatstrom aus, der gegenüber dem Permeatstrom im ersten Verfahrensschritt die Wände der Hohlfasermembranen in umgekehrter Richtung durchströmt und dabei die Membranstruktur von den vorher ein- oder angeschwemmten Teilchen freispült. Dabei kann das zweite Fluid auch gleichzeitig Elutionsflüssigkeit für im ersten Verfahrensschritt ebenfalls in der Membranstruktur zurückgehaltene weitere Zielsubstanzen sein.

Bei der Dimensionierung des Sammelraums für das Permeat kommt es darauf an, daß der Strömungswiderstand, der bei der Durchströmung des Sammelraums durch das Permeat entsteht, klein gegenüber dem bei der Durchströmung der semipermeablen Wand entstehenden Strömungswiderstand ist. Gleichzeitig ist anzustreben, daß pro Hohlfasermembran ein möglichst hoher Anteil ihres durch ihre äußere Kontur definierten Gesamtvolumens aus semipermeabler poröser Membranwand besteht, in der die stoffspezifische Behandlung erfolgen kann.

Neben anderen Einflußfaktoren wie der hydraulischen Permeabilität der Membran oder dem Strömungswiderstand im Sammelraum wird der durch die semipermeablen Wände der Hohlfasermembranen strömende Permeatstrom durch den längs der Hohlfasermembranen durch den Primärstrom erzeugten Druckgradienten dp/dx bestimmt. Dabei ist dp die differentielle Druckänderung längs einer differentiellen Strecke dx in Richtung des Primärstroms. Je größer der Betrag dieses Druckgradienten ist, umso größer ist der Permeatstrom durch die Membranwand und umso größer ist demzufolge der Teil des Primärstroms, der der stoffspezifischen Behandlung unterzogen wird. Das Druckgefälle in Richtung der Längserstrekkung einer Hohlfasermembran, d.h. entlang des vom Primärstrom durchströmten Kanalsystems nimmt mit steigendem Durchsatz durch das Kanalsystem, d.h. mit steigendem Primärstrom zu.

Der Betrag des Druckgefälles dp/dx nimmt desweiteren zu, je geringer die Strömungsquerschnitte der Kanäle sind, aus denen das vom Primärstrom durchströmte Kanalsystem zusammengesetzt ist, d.h. also je geringer - je nach Ausführungsform - der Querschnitt der Lumina bzw. der Zwischenräume zwischen den Hohlfasermembranen und zwischen Hohlfasermembranen und Gehäuseinnenwand ist. Bei ausreichend kleiner Dimension der Strömungsquerschnitte der Kanäle des Kanalsystems entstehen in Verbindung mit geeigneten Durchsätzen durch das bzw. Strömungsgeschwindigkeiten in dem Kanalsystem genügend hohe Druckgradienten, um dem diffusiven Transport durch die poröse Membranstruktur einen wesentlich größeren konvektiven Transport aufgrund des Permeatstroms zu überlagern. Andererseits dürfen die Querschnitte der Kanäle nicht zu klein sein, damit - wie z.B. bei der stoffspezifischen Behandlung von Suspensionen, das zu behandelnde Fluid noch ungehindert durch die Kanäle strömen kann.

Im erfindungsgemäßen Membranmodul werden bevorzugt Hohlfasermembranen eingesetzt, deren Wände eine im wesentlichen gleichmäßige Dicke aufweisen. Auf diese Weise wird auch erreicht, daß der Permeatstrom bei der Durchströmung der Membran an jeder Stelle einer Hohlfasermembran im wesentlichen gleiche Durchströmwege zurücklegt, was im Hinblick auf eine möglichst gleichmäßige Verweilzeit des zu behandelnden Fluids von besonderem Vorteil ist.

Bei Einsatz von mehreren Hohlfasermembranen als Bündel ist es von Vorteil, wenn die im Bündel zusammengefaßten Hohlfasermembranen durch Abstandshalter gegeneinander auf Abstand gehalten werden, so daß sich um die Hohlfasermembranen herum ein Außenraum mit definierten Zwischenräumen zwischen den Hohlfasermembranen ausbildet. Auf diese Weise wird eine gleichmäßige Umströmung der einzelnen Hohlfasermembranen des Bündels ermöglicht. Darüberhinaus läßt sich für den Fall der Außenumströmung der Hohlfasermembranen durch den Primärstrom über die Abstandshalter die Größe der Strömungsquerschnitte der Kanäle des die Hohlfasermembranen umgebenden Kanalsystems einstellen, womit Einfluß auf den sich in den Kanälen einstellenden Druckgradienten genommen werden kann. Im Falle der stoffspezifischen Behandlung von Suspensionen und der Einleitung des Primärstroms in den Außenraum wird über die Abstandshalter auch eine Anpassung an die Größe der in der Suspension enthaltenen Teilchen ermöglicht.

Zweckmäßigerweise sind die Abstandshalter so ausgeführt, daß sie eine elastische Komponente aufweisen. Hierdurch kann ein solches Bündel aus Hohlfasermembranen auf einfache Weise in das Gehäuse des Membranmoduls eingebracht werden, indem es zunächst geringfügig zusammengedrückt wird, wobei der Abstand zwischen den Hohlfasermembranen etwas verringert wird, in das Gehäuse eingeschoben wird und anschließend entspannt wird, wodurch sich der Abstand zwischen den Hohlfasermembranen wieder vergrößert. Als Folge wird erreicht, daß das Bündel von Hohlfasermembranen an seinem äußeren Umfang an der Gehäuseinnenwand anliegt, und eine unerwünschte Randströmung entlang der Gehäuseinnenwand wird vermieden.

Die Hohlfasermembranen innerhalb eines Bündels sind vorzugsweise durch textile Fäden auf Abstand gehalten. Im Prinzip genügt es dabei, die textilen Fäden zwischen die Hohlfasermembranen zu legen. Bevorzugt werden jedoch die Hohlfasermembranen mittels der Abstandshalter in mindestens eine Hohlfasermatte eingebunden, wobei es sich bei diesen Abstandshaltern besonders bevorzugt um textile Fäden handelt. Derartige Hohlfasermmatten lassen sich vorteilhaft nach bekannten Verfahren als Wirkmatte, Webmatte oder Webbändchen, aber auch als Strick- oder als Häkelmatte herstellen. In den Fällen des Webens oder Wirkens sind die textilen Fäden die quer zu den Hohlfasermembranen verlaufenden Web- bzw. Kettfäden. Durch diese Querfäden werden die Hohlfasermembranen vorteilhaft gegeneinander auf gleichmäßigen Abstand gehalten und innerhalb der Matten im wesentlichen parallel zueinander angeordnet. Mittels derartiger Matten lassen sich Bündel von Hohlfasermembranen herstellen, die eine hohe Ordnung aufweisen und bei denen zwischen den Hohlfasermembranen ein gleichmäßiges Kanalsystem ausgebildet werden kann.

In weiteren Ausführungsformen des erfindungsgemäßen Membranmoduls sind die Hohlfasermembranen mittels flächiger, vorzugsweise streifenförmiger Verbindungselemente in die jeweilige Hohlfasermatte eingebunden, wobei diese streifenförmigen Verbindungselemente gleichzeitig als Abstandshalter fungieren. Solche streifenförmigen Verbindungselemente können quer, aber auch unter einem anderen Winkel zu den vorteilhafterweise zueinander im wesentlichen parallel angeordneten Hohlfasermembranen verlaufen und sind beispielsweise mittels eines punktförmig aufgetragenen Klebers z.B. auf Polyurethanbasis auf diese auf laminiert.

Derartige Matten von Hohlfasermembanen werden vorzugsweise zu einem Stapel bzw. zu einem Bündel von einzelnen in der Breite entsprechend bemessenen Mattenlagen aufeinandergeschichtet. Die Hohlfasermembranmatten können jedoch auch vorteilhaft einlagig oder übereinandergelegt mehrlagig zick-zack-förmig zu einem Stapel bzw. zu einem Bündel gefaltet werden. In einer weiteren vorteilhaften Ausgestaltung der Erfindung werden die beschriebenen Hohlfasermembranmatten einlagig oder mehrlagig so übereinandergelegt, daß die Hohlfasermembranen der einzelnen Lagen zueinander im wesentlichen parallel sind, und nach bekannten Verfahren im wesentlichen parallel zur Längserstreckung der Hohlfasermembranen spiralförmig um eine Achse oder einen Kern zu Bündeln aufgewickelt.

Bei den so hergestellten Bündeln oder Stapeln werden die einzelnen Wicklungen bzw. die einzelnen Lagen zweckmäßigerweise gegeneinander auf Abstand gehalten, z.B. mittels der eingewebten oder eingewirkten Fäden oder eingebrachten Verbindungselemente und gegebenenfalls mittels zusätzlich zwischen den einzelnen Wickellagen eingebrachter Abstandshalter etwa in Form von fluiddurchlässigen Vliesen oder Geweben.

Eine weitere vorteilhafte Ausführungsform sind Bündel, die aus mindestens zwei übereinandergelegten Hohlfasermatten, bei denen die Hohlfasermembranen innerhalb jeder Matte in einem gegenseitigen Abstand zueinander angeordnet sind, durch spiralförmiges Wickeln um eine Achse oder einen Kern hergestellt worden sind, wobei die Hohlfasermatten so übereinandergelegt sind, daß die Hohlfäden der übereinandergelegten Hohlfasermatten in eine sich überkreuzende Anordnung gebracht sind. Die Herstellung derartiger Bündel wird eingehend in der EP-A-0 285 812 beschrieben. Für solche Bündel kann der sich zwischen den überkreuzt angeordneten Hohlfasermembranen ausbildende Winkel zwischen 0° und 120° liegen, als günstig haben sich Winkel zwischen 30° und 90° herausgestellt.

In einer weiteren vorteilhaften Ausgestaltung besteht die in den erfindungsgemäßen Membranmodulen enthaltenen Hohlfasermembranbündel aus Kernbündeln, die um einen Stützfaden herum angeordnete Hohlfasermembranen enthalten, wobei die um den Stützfaden angeordneten Hohlfasermembranen mit mindestens einem Wikkelfaden umwickelt sind. Durch die Stützfäden werden die im Kernbündel enthaltenen Hohlfasermembranen gegenseitig auf Abstand gehalten. Gleichzeitig sorgen die Wickelfäden für eine Beabstandung der das Hohlfasermembranbündel zusammensetzenden Kernbündel untereinander, so daß insgesamt eine gute Umströmbarkeit der im Hohlfasermembranbündel enthaltenen Hohlfasermembranen gewährleistet ist. Derartige aus Kernbündeln zusammengesetzte Hohlfasermembranbündel werden in der EP-A- 0 732 141 beschrieben.

Zur Erhöhung des Wirkungsgrades der stoffspezifischen Behandlung ist es von Vorteil, wenn die Schritte b) und c) des erfindungsgemäßen Verfahrens mehrfach durchlaufen werden. Dies läßt sich dadurch erreichen, daß im Gehäuse in Richtung der Längserstreckung der Hohlfasermembranen mehrere Hohlfasermembranbündel als Stufen hintereinander angeordnet sind. Eine solche Hintereinanderschaltung von mehreren Stufen ist bei entsprechender Ausgestaltung des Gehäuses und der Übergänge zwischen den einzelnen Stufen sowohl bei Ausführungsformen des Membranmoduls möglich, bei denen der Primärstrom durch die Lumina der Hohlfasermembranen geleitet wird, als auch bei Ausführungsformen, bei denen der Primärstrom den Außenraum um die Hohlfasermembranen durchströmt.

Durch die Hintereinanderschaltung einer Vielzahl von Stufen kann gleichzeitig die einzelne Stufe in ihrer Längsabmessung, d.h. in ihrer Abmessung in Richtung der Längserstreckung der in ihr enthaltenen Hohlfasermembranen kurz gehalten und dadurch eine Konzentrationsänderung bezüglich möglicher kritischer Komponenten in dem zu behandelnden Fluid vermieden werden. Dies ist insbesondere bei solchen Verfahren zur stoffspezifischen Behandlung von Suspensionen von Bedeutung, bei denen zumindest ein Teil der suspendierten Teilchen durch die semipermeable Membranwand der Hohlfasermembranen zurückgehalten werden soll und gleichzeitig zu hohe Aufkonzentrationen an suspendierten Teilchen vermieden werden sollen, wie z.B. bei der stoffspezifischen Behandlung von Blut. Durch vergleichsweise kurze Hohlfasermembranen wird entlang der Hohlfasermembranen dem Primärstrom nur ein geringer Teilstrom entzogen, so daß die Konzentrationsänderungen bis zur folgenden Zusammenführung von Primär- und Permeatstrom gering bleiben.

Bevorzugt liegt bei dem erfindungsgemäßen Membranmodul die Anzahl der Stufen im Gehäuse zwischen 1 und 100. Bestens bewährt hat sich eine Stufenzahl zwischen 1 und 10. Dabei ist es vorteilhaft, wenn die einzelnen Stufen einen Abstand zueinander aufweisen, um weder den Primärstrom noch den Permeatstrom lokal durch die in Durchströmungsrichtung des Gehäuses nachfolgend angeordnete Stufe zu behindern und um eine gute Durchmischung von Primärstrom und Permeatstrom zu ermöglichen. Eine gleichmäßige Durchmischung ist von Vorteil, um z.B. unerwünschte Konzentrationsschwankungen zu vermeiden.

Natürlich ist in Anpassung an die Erfordernisse des Behandlungsverfahrens auch die Hintereinanderschaltung mehrerer erfindungsgemäßer Membranmodule möglich, die vorzugsweise mehrere Stufen von Hohlfasermembranen enthalten. In einer weiteren bevorzugten Ausgestaltung des erfindungsgemäßen Verfahrens wird das zu behandelnde Fluid rezirkuliert und durchläuft das Behandlungsverfahren mehrfach, bis ein gewünschter Behandlungsgrad erreicht ist.

Es können Hohlfasermembranen mit verschiedenen äußeren Konturen, d.h. mit im Querschnitt betrachtet verschiedenen äußeren Umrissen eingesetzt werden. Die Hohlfasermembranen können beispielsweise eine im wesentlichen runde bzw. kreisförmige, dreieckige, viereckige, sechseckige oder achteckige Kontur aufweisen, sie können auch oval, eliptisch, dreilappig, vierlappig usw. ausgebildet sein. Für den Einsatz im erfindungsgemäßen Membranmodul bzw. zur Durchführung des erfindungsgemäßen Verfahrens haben sich Hohlfasermembranen bewährt, die eine Wandstärke zwischen 15 µm und 1500 µm aufweisen, bestens bewährt haben sich Hohlfasermembranen mit einer Wandstärke zwischen 100 µm und 300 µm. Vorzugsweise beträgt der hydraulische Durchmesser der eingesetzten Hohlfasermembranen 50 µm bis 900 µm mit der Definition des hydraulischen Durchmessers dₕ als dₕ=4*A/U, wobei A die Fläche des Strömungsquerschnitts des mindestens einen Lumens der Hohlfasermembran und U den Umfang des Strömungsquerschnitts des jeweiligen Hohlfaserlumens bezeichnet. Im Falle, daß die Hohlfasermembranen jeweils mehrere Lumina aufweisen, bezeichenen A und U jeweils die Summe der Flächen bzw. Umfänge der einzelnen Lumina der jeweiligen Hohlfasermembran. Besonders bevorzugt sind Hohlfasermembranen mit einem hydraulischen Durchmesser zwischen 200 µm und 400 µm.

Bei Ausführungsformen des erfindungsgemäßen Membranmoduls, bei denen eine außenseitige Umströmung der Hohlfasermembranen durch den Primärstrom erfolgt, gelten die oben angegebenen Bereiche bzgl. der hydraulischen Durchmesser analog für die Querschnitte der Kanäle des durch den Außenraum um die Hohlfasermembranen ausgebildeten Kanalsystems. Hierbei ist der hydraulische Durchmesser dₕ₁ der Kanäle als dₕ₁=4*A₁/U₁ definiert mit A₁ als der Fläche des Strömungsquerschnitts zwischen den Hohlfasermembranen senkrecht zu den Hohlfasermembranen und U₁ als der Summe der äußeren Umfänge aller Hohlfasermembranen und des inneren Umfangs des Gehäuses. In diesen Fällen ist der hydraulische Duchmesser dₕ der Hohlfasermembranen vorzugsweise um den Faktor 1,2 bis 12 kleiner als der hydraulische Durchmesser dₕ₁ der Kanäle.

In der bevorzugten Ausführung der Erfindung strömt der Permeatstrom durch die semipermeable Wand der Hohlfasermembranen und transportiert konvektiv die Zielsubstanz durch die Membran. Dies setzt voraus, daß die semipermeable, poröse Wand der Hohlfasermembranen eine Porengröße aufweist, die einen konvektiven Transport der Zielsubstanz durch die Membranwand zuläßt. Bei gegebenem Druckgradienten im vom Primärstrom durchströmten Kanalsystem und bei gegebenen geometrischen Dimensionen der Hohlfasermembranen wird natürlich der Permeatstrom maximiert, wenn die mittlere Porengröße der Membranen maximiert wird. Im Anwendungsfall muß die Porengröße aber auch auf die Größe der Zielsubstanz abgestimmt werden, die in Form gelöster Makromoleküle, aber auch in Form kleiner Teilchen mit einer Teilchengröße im Sub-Mikrometerbereich vorliegen kann. Gleichzeitig kann es z.B. bei der stoffspezifischen Behandlung von Suspensionen vielfach erforderlich sein, daß die Membran eine trennenden Funktion übernimmt und in der Suspension enthaltende Komponenten, die nicht Zielsubstanzen sind, zurückhält. Dies bedeutet, daß die Porengröße einen bestimmten maximalen Wert nicht übersteigen darf. Hierdurch kann einer Blockade des Porensystems oder beispielsweise unerwünschten Wechselwirkungen zwischen derartigen zurückzuhaltenden Komponenten mit zur Wechselwirkung mit den Zielsubstanzen vorgesehenen stoffspezifisch wirkenden Gruppen in der Membran vorgebeugt werden.

Auf der anderen Seite kann es im Hinblick auf die im folgenden ausgeführten Anwendungen des erfindungsgemäßen Membranmoduls bzw. Ausführungsformen des erfindungsgemäßen Verfahrens eher wichtig sein, Membranen mit möglichst kleinen Porengrößen und möglichst großem Porenvolumen bzw. möglichst großer Porosität zu verwenden, um so für die stoffspezifische Behandlung eine möglichst große innere, d.h. durch die Poren gebildete Oberfläche der Membran zur Verfügung zu stellen. Bevorzugt weisen die erfindungsgemäß eingesetzten Hohlfasermembranen eine mittlere Porosität zwischen 50 Vol.% und 90 Vol.% auf. Als mittlere Porosität wird das Verhältnis des Porenvolumens der Hohlfasermembran zum Wandvolumen der Hohlfasermembran verstanden, wobei sich das Wandvolumen aus dem Porenvolumen und dem Volumen des die Membranstruktur aufbauenden Materials zusammensetzt.

Die Anforderungen an den Aufbau der Hohlfasermembran, d.h. an ihre Struktur und Porengrößenverteilung über der Wanddicke resultieren aus dem jeweiligen Anwendungsfall der stoffspezifischen Behandlung. Die Membranstruktur kann über die Wanddicke isotrop sein, d.h. innerhalb der Membranwand sind die Porendurchmesser im wesentlichen konstant, sie können anisotrop, symmetrisch oder auch asymmetrisch sein, und die Membran kann an einer ihrer Seiten eine Schicht mit wesentlich dichterer Porenstruktur, d.h. eine Haut aufweisen. Im Falle einer asymmetrischen Membran kann die dichtere Schicht dem Primärstrom oder aber dem Sammelraum für das Permeat zugewandt sein. Beispielsweise kann es bei der stoffspezifischen Behandlung von Suspensionen erforderlich sein, daß die Membran zur Erzielung einer bestimmten Trennwirkung einen kleinen Porendurchmesser an der dem Primärstrom zugewandten Seite aufweist. Um gleichzeitig einen möglichst großen Permeatstrom durch die Membranwand zu erhalten, ist jedoch die übrige Membranstruktur zweckmäßigerweise grobporiger, jedoch je nach Anwendung nicht zu grobporig, um eine möglichst große innere Oberfläche zu erzielen.

Bevorzugt werden Hohlfasermembranen mit einem mittleren Porendurchmesser zwischen 0,005 und 5 µm , besonders bevorzugt solche mit einem mittleren Porendurchmesser zwischen 0,1 und 3 µm eingesetzt.

Zur Bestimmung des mittleren Porendurchmessers werden je nach Größe des Porendurchmessers und je nach Membranstruktur unterschiedliche Verfahren angewandt. Für im wesentlichen isotrope Porenstrukturen werden Porendurchmesser indirekt durch ein Filtrationsexperiment bestimmt, indem eine wässrige Dextranlösung mit einer vorgegebenen Größenverteilung von Dextranmolekülen durch die Membran filtriert wird. Aus dem dabei gemessenen relativen Rückhalt als Funktion der nominalen Moleküldurchmesser wird die Porendurchmesserverteilung und daraus der mittlere Porendurchmesser berechnet. Dieses Verfahren wird beispielsweise von K. Sakai, J. Membrane Science 96 (1994), 91-130, oder von Shin-ichi Nakao, J. Membrane Science 96 (1994) 131-165, für Dialyse- bzw. Filtrationsmembranen beschrieben.

Für anisotrope Membranen, die z.B. eine Schicht mit dichterer Porenstruktur aufweisen, werden zur Bestimmung der mittleren Porendurchmesser innerhalb der dichteren Schicht ebenfalls die zitierten, auf Filtrationsexperimenten basierenden Bestimmungsverfahren herangezogen. Zur Bestimmung der mittleren Porendurchmesser der grobporigeren Bereiche der anisotropen Membranen wird ein bildanalytisches Verfahren nach L. Zeman u.a., J. Membrane Science 71 (1992), 221-231 eingesetzt. Dieses eignet sich für einen Porengrößenbereich zwischen 0,1 µm und 5 µm, naturgemäß sowohl für isotrope als auch für anisotrope Porenstrukturen.

Für Anwendungen des erfindungsgemäßen Membranmoduls bzw. des erfindungsgemäßen Verfahrens für Flüssigkeiten wie insbesondere klare Lösungen oder Suspensionen ist es vorteilhaft, wenn die Hohlfasermembranen in ihrer Wand über mindestens 80 % der Wanddicke einen im wesentlichen konstanten mittleren Porendurchmesser aufweisen. Hierdurch läßt sich eine hohe innere Oberfläche, verbunden mit einer großen Anzahl immobilisierter, stoffspezifisch wirkender Gruppen in der Membran bei gleichzeitig geringem Druckverlust bei der Durchströmung der Membranwand und damit ein hoher Permeatstrom erzielen. Als ein im wesentlichen konstanter mittlerer Porendurchmesser wird ein solcher verstanden, der sich über die Wanddicke um nicht mehr als +/-50 % ändert.

Für die stoffspezifische Behandlung von Suspensionen erweist es sich als günstig, wenn Membranen eingesetzt wird, die auf ihrer dem Primärstrom zugewandten Seite eine Schicht besitzen, die einen kleineren mittleren Porendurchmesser aufweist als der in Richtung des Lumens angrenzende Bereich der Membranen mit im wesentlichen konstantem mittleren Porendurchmesser. Vorteilhafterweise ist diese Schicht zwischen 1 µm und 5 µm dick und weist einen mittleren Porendurchmesser auf, der um den Faktor 5 bis 50 kleiner ist als der mittlere Porendurchmesser im angrenzenden Bereich.

Im erfindungsgemäßen Membranmodul bzw. zur Durchführung des erfindungsgemäßen Verfahrens werden bevorzugt poröse Hohlfasermembranen mit großer innerer Oberfläche eingesetzt. Bewährt haben sich Hohlfasermembranen mit einer BET-Oberfläche zwischen 2 und 300 m² je cm³ Wandvolumen, bestens bewährt haben sich Hohlfasermembranen mit einer BET-Oberfläche zwischen 8 und 30 m² je cm³ Wandvolumen. Das auf Stickstoffadsorptionsmessung basierende BET-Verfahren zur Bestimmung der Oberfläche poröser Membranstrukturen ist von K.Kaneko, J. Membrane Science 96 (1994), 59-89 beschrieben.

Hinsichtlich des Materials, aus dem die Hohlfasermembranen gemäß der Erfindung aufgebaut sind, sind keinerlei Einschränkungen gegeben. So können Membranen aus anorganischen Materialien wie Glas, Keramik, SiO₂, Kohlenstoff oder Metall, aus organischen Polymeren oder Mischungen daraus eingesetzt werden. Die Polymeren können hydrophilen und/oder hydrophoben Charakter aufweisen, sie können ausgewählt sein aus der Gruppe der cellulosischen Polymeren, wie z.B. Cellulose oder regenerierte Cellulose, modifizierte Cellulose, wie z.B. Celluloseester, Celluloseäther, aminmodifizierte Cellulosen, sowie Mischungen von cellulosischen Polymeren, aus der Gruppe der synthetischen Polymeren wie z.B. Polyacrylnitril und entsprechende Copolymere, Polyurethan enthaltende Polymere, Polyarylsulfone und Polyarylethersulfone, wie z.B. Polysulfon oder Polyethersulfon, Polyvinylidenfluorid, Polytetrafluorethylen, wasserunlösliche Polyvinylalkohole, aliphatische und aromatische Polyamide, Polyimide, Polyetherimide, Polyester, Polycarbonate, Polyolefine, wie Polyethylen, Polypropylen, Polyvinylchlorid, Polyphenylenoxid, Polybenzimidazole und Polybenzimidazolone, sowie daraus gewonnenen Modifikationen, Blends, Mischungen oder Copolymeren dieser Polymeren. Diesen Polymeren bzw. Polymergemischen können weitere Polymere wie z.B. Polyethylenoxid, Polyhydroxyether, Polyethylenglykol, Polyvinylpyrrolidon, Polyvinylalkohol oder Polycaprolacton, oder anorganische Stoffe wie z.B. SiO₂ als Zusatzstoffe beigemischt werden. Im Einzelfall kann die Membran auch z.B. einer Oberflächenmodifikation unterzogen worden sein, um bestimmte Eigenschaften der Membranoberfläche z.B. in Form bestimmter funktioneller Gruppen einzustellen. Im Falle des Einsatzes von polyolefinischen Polymeren kann es erforderlich sein, zumindest die innere Oberfläche der Membran z.B. mit einem funktionalisierbaren Polymer zu beschichten.

Besonders gute Erfahrungen wurden mit Membranen aus cellulosischen Polymeren, Polyamiden, Polypropylen, Polyethersulfonen oder aus lösemittelstabilen und pH-Wert-stabilen Polymeren gemacht, insbesondere mit Membranen aus Polytetrafluorethylen oder Polyvinylidenfluorid, sowie daraus gewonnenen Modifikationen, Blends, Mischungen oder Copolymeren. Derartige Membranen werden beispielsweise in der DE-A-39 23 128 beschrieben.

An die Form des inneren Querschnitts des Gehäuses, in dem die zu einem Bündel zusammengefaßten Hohlfasermembranen oder die Stufen von Hohlfasermembranen angeordnet sind, sind keine besonderen Anforderungen zu stellen. Der innere Querschnitt wird zweckmäßigerweise an die jeweilige Verwendung des erfindungsgemäßen Membranmoduls bzw. an die Kontur der im Gehäuse enthaltenen Bündel angepaßt. Bevorzugt werden jedoch Gehäuse mit quadratischem, rechteckigem, sechseckigem, achteckigem oder auch rundem Innenquerschnitt verwendet.

In die Gehäuse werden die Hohlfasermembranbündel, die bevorzugt Abstandshalter mit einer elastischen Komponente aufweisen, unter einer geringen Kompression eingebracht und unter Entspannung im Gehäuse positioniert. Anschließend werden die Hohlfasermembranen nach an sich bekannten Methoden am ihrem ersten Ende in eine Vergußmasse fluiddicht in das Gehäuse eingebettet.

Bei Ausführungsformen mit außenseitiger Umströmung der Hohlfasermembranen durch den Primärstrom weisen die Gehäuse in einer bevorzugten Ausführungsform einen inneren Querschnitt auf, der sich entlang der Hohlfasermembranen in Richtung auf deren zweites Ende verjüngt, d.h. die Querschnittsfläche des Gehäuses nimmt in dieser Richtung ab. Hierdurch wird der Abstand zwischen den Hohlfasermembranen in Richtung auf ihr zweites, nicht eingebettetes Ende reduziert und der Druckabfall und damit der Permeatstrom erhöht. Gleichzeitig läßt sich damit eine Vergleichmäßigung des Permeatstroms über die Längserstreckung der Hohlfasermembranen erzielen.

Der erfindungsgemäße Membranmodul bzw. das erfindungsgemäße Verfahren kann zu verschiedensten stoffspezifischen Behandlungen von Fluiden eingesetzt werden. Als zu behandelnde Fluide gelangen bevorzugt Suspensionen zum Einsatz. Besonders gute Resultate in der Behandlung werden erzielt, wenn bei dem erfindungsgemäßen Verfahren der erfindungsgemäße Membranmodul verwendet wird, wobei auf und/oder in den Hohlfasermembranen bevorzugt stoffspezifisch wirkende Gruppen immobilisiert sind. Im Hinblick auf das jeweilige Behandlungsverfahren können auch unterschiedliche stoffspezifisch wirkende Gruppen auf und/oder in den Hohlfasermembranen immobilisiert sein, die spezifisch mit verschiedenen in dem zu behandelnden Fluid enthaltenen Zielsubstanzen wechselwirken. In gleicher Weise können auch unterschiedliche Hohlfasermembranen mit jeweils verschiedenen stoffspezifisch wirkenden Gruppen zusammen verwendet werden. Bei Einsatz von Membranmodulen mit mehreren Stufen können in den Hohlfasermembranen der einzelnen Stufen gleiche, jedoch auch unterschiedliche stoffspezifisch wirkende Gruppen immobilisiert sein.

Zur Immobilisierung stoffspezifisch wirkender Gruppen auf und/oder in den Hohlfasermembranen können die in der Literatur beschriebenen Verfahren eingesetzt werden. Auch hinsichtlich der in Bezug auf die jeweilige stoffspezifische Fluidbehandlung verwendbaren stoffspezifisch wirkenden Gruppen kann auf die in der Literatur beschriebenen zurückgegriffen werden. Verschiedene Möglichkeiten der Immobilisierung der stoffspezifisch wirkenden Gruppen kommen in Betracht, sowohl in Bezug auf den Ort, wo sie immobilisiert sind, als auch in Bezug auf die Art und Weise ihrer Immobilisierung.

So können diese stoffspezifisch wirkenden Gruppen adsorptiv oder über kovalente Bindungen an die Membran gekoppelt sein. Diese Kopplung an die Membran kann sowohl vor Einbau in das Gehäuse als auch nach Einsetzen der Membran in das Gehäuse des erfindungsgemäßen Membranmoduls erfolgen. Hierbei können in Abstimmung auf den jeweiligen Anwendungsfall die stoffspezifisch wirkenden Gruppen beispielsweise im wesentlichen homogen an die gesamte Oberfläche der porösen Membran, d.h. sowohl an die äußeren, den Lumina sowie dem Außenraum zugewandten Oberflächen, als auch an die inneren, durch die Poren gebildeten Oberflächen gekoppelt, d.h. auf und in der Membran immobilisiert sein. Es kann aber auch erforderlich sein, daß die stoffspezifisch wirkenden Gruppen nur an einem Teil dieser Oberflächen immobilisiert sind, etwa wenn einzelne Bestandteile des zu behandelnden Fluids nicht mit den stoffspezifisch wirkenden Gruppen in Kontakt kommen sollen.

Auch ein direkter Einbau von stoffspezifisch wirkenden Gruppen in die Membranmatrix ist möglich, im Falle von Membranen aus polymeren Materialien etwa durch Modifikation des Polymermaterials mit beispielsweise ionischen, hydrophilen oder hydrophoben Gruppen oder durch Einsatz von Polymerblends, bei denen mindestens eine Polymerkomponente stoffspezifisch wirkende Gruppen aufweist. Eine weitere Möglichkeit besteht darin, derartige stoffspezifisch wirkende Gruppen oder auch solche Gruppen aufweisende Trägersubstanzen oder Partikel in das Porensystem einer Membran beim Herstellungsverfahren der Membran einzulagern oder nachträglich in die fertige Membran z.B. einzuschwemmen. In letzterem Fall weist die Membran zweckmäßigerweise eine asymmetrische Struktur sowie gegebenenfalls eine Haut auf, wobei die Öffnungen der Haut bzw. die Poren der feinporigeren Seite der Membran so bemessen sind, daß die stoffspezifisch wirkenden Gruppen bzw. die genannten Trägersubstanzen oder Partikel nicht hindurchtreten können.

In jedem Fall ist die Porengröße der verwendeten Membran so zu wählen, daß auch trotz der in den Poren immobilisierten stoffspezifisch wirkenden Gruppen die Zielsubstanzen konvektiv von zumindest einem Teil des zu behandelnden Fluids durch die Membranwand transportiert werden können.

Gemäß einer besonders bevorzugten Ausgestaltung der Erfindung handelt es sich bei den stoffspezifisch wirkenden Gruppen um Liganden zur affinen Trennung von Ligaten aus zu behandelnden Flüssigkeiten oder um Katalysatoren, wobei unter Katalysatoren auch Biokatalysatoren wie z.B. Enzyme zu verstehen sind. Bevorzugte erfindungsgemäße Verfahren sind Verfahren zur Reinigung/Trennung von Ligaten aus einer ligathaltigen Flüssigkeit, wobei Hohlfasermembranen ausgewählt werden, auf und/oder in denen Liganden für besagte Ligaten immobilisiert sind, bzw. erfindungsgemäße Membranmodule verwendet werden, die derartige Hohlfasermembranen enthalten. Desweiteren sind bevorzugte Verfahren solche zur katalytischen Behandlung von Flüssigkeiten, wobei Hohlfasermembranen ausgewählt werden, auf und/oder in denen Katalysatoren immobilisiert sind, bzw. erfindungsgemäße Membranmodule verwendet werden, die derartige Hohlfasermembranen enthalten. Zu den katalytischen Verfahren zählen auch biokatalytische Verfahren wie z.B. enzymatische Verfahren.

Liganden können in dem hier gebrauchten Sinne je nach Anwendung nicht-spezifisch, gruppenspezifisch oder spezifisch wirken. Hinsichtlich einsetzbarer Liganden sowie hinsichtlich der Möglichkeiten ihrer Immobilisierung sei auf die Ausführungen in der europäischen Patentanmeldung EP 787 523 verwiesen, auf deren Offenbarung sich hier ausdrücklich bezogen wird.

Der erfindungsgemäße Membranmodul bzw. das erfindungsgemäße Verfahren ist für zahlreiche Anwendungen zur Reinigung/Trennung von Ligaten aus einer ligathaltigen Flüssigkeit einsetzbar, wie sie beispielsweise allgemein aus dem Bereich der Affinitätschromatographie bekannt sind, wobei unter Affinitätschromatographie biospezifische Adsorptionen oder auch die Ionenaustauscherchromatographie oder die Metallchelatchromatographie verstanden werden.

Interessante Anwendungen beziehen sich auf die Reinigung von monoklonalen Flüssigkeiten, auf die Entfernung von Proteasen zur Stabilisierung von biologischen Flüssigkeiten, auf die Gewinnung oder therapeutische Entfernung von Blutplasmabestandteilen aus Blutplasma oder Vollblut, auf die Entfernung von Pyrogenen aus biologischen oder pharmazeutischen Flüssigkeiten, auf die Trennung von Enantiomeren, auf die Isolierung von Enzymen oder auch auf die Zellselektion mittels spezifischer, auf ein bestimmtes Oberflächenprotein der Zellen reagierender Liganden, um nur einige Beispiele zu nennen. Auch für Anwendungen im Bereich der Gentechnik sind die erfindungsgemäßen Membranmodule bestens geeignet, wenn bei solchen Anwendungen z.B. ein konvektiver Transport von Genen zu beispielsweise auf und/oder in der Membran immobilisierten Viren oder Zellen erreicht werden soll.

Für Anwendungen im Bereich der enzymatischen oder allgemein katalytischen Behandlung von Flüssigkeiten können Hohlfasermembranen ausgewählt werden, auf und/oder in denen nach an sich bekannten Methoden Enzyme oder Katalysatoren immobilisiert sind. Hinsichtlich der mit dem erfindungsgemäßen Membranmodul bzw. dem erfindungsgemäßen Verfahren durchführbaren katalytischen Behandlungen sei wiederum auf die Ausführungen in der europäischen Patentanmeldung EP 787 523 verwiesen, auf deren Offenbarung sich hier ausdrücklich bezogen wird.

Die sich zwischen den Hohlfasermembranen befindenden Abstandshalter können außer der Abstandshalterfunktion selbst weitere Funktionen erfüllen. So können - außer auf und/oder in der porösen Membranwand der Hohlfasermembranen zusätzlich stoffspezifisch wirkende Gruppen an den Abstandshaltern immobilisiert sein. Die Abstandshalter sind zu diesem Zweck vorteilhafterweise aus demselben Polymer oder derselben Polymerfamilie wie das Membranmaterial. Insbesondere für die zwischen den Matten aus Hohlfasermembranen eingebrachten Abstandshalter haben sich hierbei textile Gewebe bewährt, wie sie z.B. von Y. Yang u.a., J. Chromatographie 598 (1992), 169-180, beschrieben werden. Dabei führen Gewebe mit multifilen Fäden mit einem Einzelfadendurchmesser zwischen 1 µm und 30 µm zu besonders guten Ergebnissen. Auch haben sich Gewebe bewährt, die sowohl die Schußals auch die Kettfäden in einem Winkel zur Richtung des Primärstroms liegen haben, der einen Wert zwischen 30° und 60° aufweist.

Die Erfindung wird nachfolgend anhand der Zeichnungen näher erläutert. Es zeigen in vereinfachter schematischer Darstellungsweise:
- Fig. 1:: Membranmodul mit lumenseitiger Durchströmung der Hohlfasermembranen durch den Primärstrom
- Fig. 2:: Membranmodul mit lumenseitiger Durchströmung der Hohlfasermembranen durch den Primärstrom und mit zur Vergußmasse benachbarter Auslaßeinrichtung
- Fig. 3:: Membranmodul mit außenseitiger Umströmung der Hohlfasermembranen durch den Primärstrom
- Fig. 4:: Membranmodul mit außenseitiger Umströmung der Hohlfasermembranen durch den Primärstrom und zwischen die Hohlfasermembranen eingebrachten Elementen zur Strömungsvergleichmäßigung und Druckerhöhung
- Fig. 5:: Membranmodul mit außenseitiger und lumenseitiger Umbzw. Durchströmung der Hohlfasermembranen durch den Primärstrom
- Fig. 6:: Membranmodul mit zwei als Stufen hintereinander angeordneten Hohlfasermembranbündeln und lumenseitiger Durchströmung der Hohlfasermembranen durch den Primärstrom
- Fig. 7:: Membranmodul mit zwei als Stufen hintereinander angeordneten Hohlfasermembranbündeln und außenseitiger Umströmung der Hohlfasermembranen durch den Primärstrom
- Fig. 8:: Membranmodul mit zwei als Stufen hintereinander angeordneten Hohlfasermembranbündeln und außenseitiger Umströmung der Hohlfasermembranen durch den Primärstrom bei ringkanalförmiger Zuführung des Primärstroms

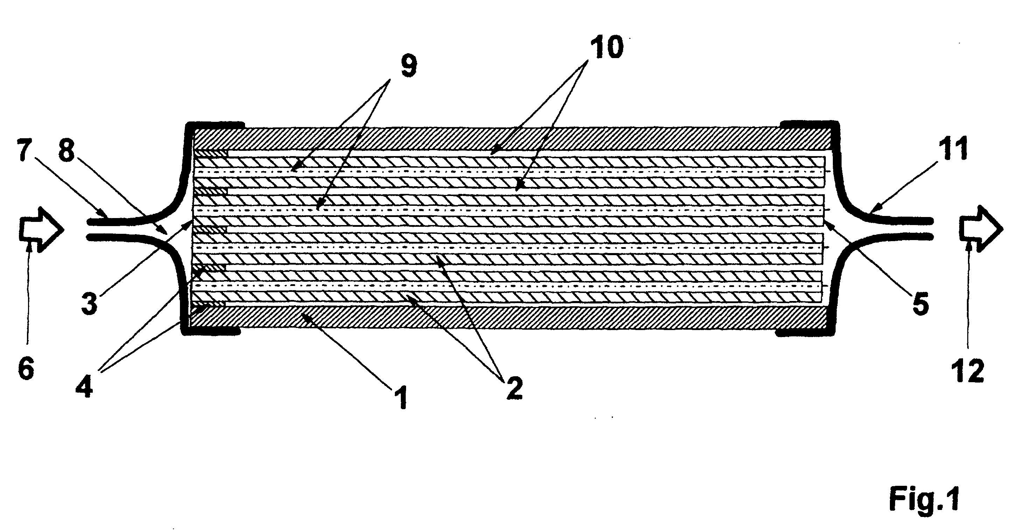

Figur 1 zeigt einen erfindungsgemäßen Membranmodul mit einem Gehäuse 1, das als Bündel angeordnete Hohlfasermembranen 2 enthält. Die Hohlfasermembranen 2 sind an ihrem einen Ende 3 in eine Vergußmasse 4 eingebettet und an ihrem zweiten Ende 5 im wesentlichen frei von einem Fluid umströmbar.

Das zu behandelnde Fluid, dargestellt durch den Pfeil 6, wird über die Einlaßeinrichtung 7 in den Verteilerraum 8 geleitet, zu dem hin die Hohlfasermembranen 2 mit ihrem eingebetteten Ende 3 geöffnet sind. Aus dem Verteilerraum 8 wird das zu behandelnde Fluid als Primärstrom in die Lumina 9 der Hohlfasermembranen 2 eingeleitet und durchströmt die Hohlfasermembranen in Richtung ihres nicht-eingebetteten Endes 5. Aufgrund des bei der Durchströmung der Lumina entstehenden Druckgefälles strömt entlang der Hohlfasermembranen 2 ein Teil des Primärstroms als Permeatstrom durch die poröse semipermeable Wand der Hohlfasermembranen 2 in den die Hohlfasermembranen umgebenden Außenraum 10, wobei der die Wand durchströmende Teilstrom einer stoffspezifischen Behandlung unterzogen wird. Das stoffspezifisch behandelte Permeat wird im Außenraum 10 gesammelt und durchströmt diesen in Richtung auf die Auslaßeinrichtung 11, wobei es sich im Bereich der nicht-eingebetteten Enden 5 der Hohlfasermembranen 2 mit dem aus den Lumina 9 ausströmenden Primärstrom vereinigt. Der aus Primärstrom und Permeat vereinigte Fluidstrom verläßt als behandeltes Fluid 12 den Membranmodul über die Auslaßeinrichtung 11, die bei dem in Figur 1 dargestellten Membranmodul an dem den nicht-eingebetteten Enden 5 der Hohlfasermembranen 2 zugewandten Ende des Gehäuses 1 angeordnet ist.

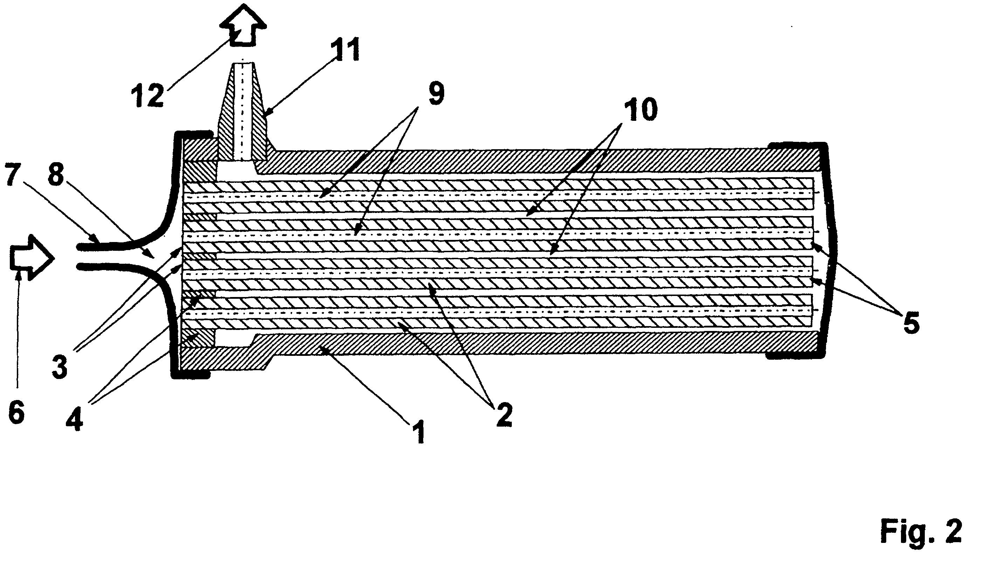

Die Anordnung der Auslaßeinrichtung an dem den nicht-eingebetteten Enden 5 der Hohlfasermembranen 2 zugewandten Ende des Gehäuses 1 stellt nur eine von mehreren Möglichkeiten dar. Bevorzugt ist - wie in Figur 2 dargestellt - für den Fall der lumenseitigen Zuführung des Primärstroms entsprechend Figur 1, die Auslaßeinrichtung 11 zur Vergußmasse 4 benachbart und damit in Richtung der ersten, eingebetteten Enden 3 der Hohlfasermembranen 2 angeordnet. In diesem Fall durchströmt auch der Primärstrom nach Austreten aus den Lumina 9 der Hohlfasermembranen 2 an deren nicht-eingebetteten Enden 5 den direkt die Hohlfasermembranen 2 umgebenden Außenraum 10 und verläßt, vermischt mit dem ebenfalls den Außenraum 10 durchströmenden Permeatstrom als behandeltes Fluid 12 das Gehäuse 1 über die Auslaßeinrichtung 11.

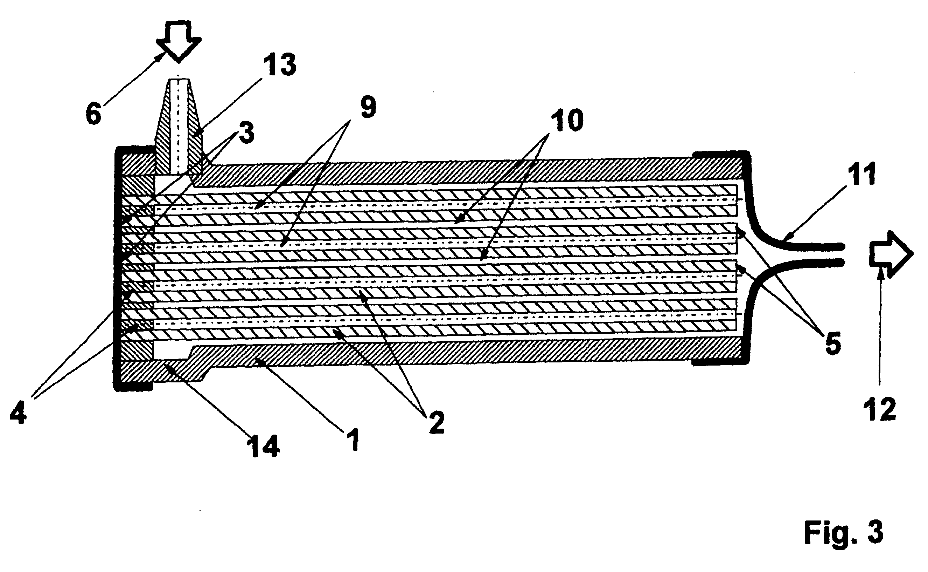

In Figur 3 ist ein Membranmodul dargestellt, bei dem die zu einem Bündel angeordneten Hohlfasermembranen 2 außenseitig vom Primärstrom umströmt werden. Bei diesem Membranmodul mündet die Einlaßeinrichtung 13 für das zu behandelnde Fluid 6 in den Außenraum 10 und ist zur Vergußmasse 4 benachbart. Im dargestellten Beispiel weist das Gehäuse 1 in Höhe der Einlaßeinrichtung 13 eine Erweiterung 14 des Durchmessers auf, um eine gleichmäßigere Verteilung des zu behandelnden Fluid als Primärstrom über den gesamten Bündelquerschnitt zu erreichen. Die ersten Enden 3 der Hohlfasermembranen 2 sind bei dieser Ausführungsform so in die Vergußmasse 4 eingebettet, daß die Lumina 9 mittels der Vergußmasse 4 an diesem Ende verschlossen sind.

Das zu behandelnde Fluid 6 strömt über die Einlaßeinrichtung 13 in den die Hohlfasermembranen 2 umgebenden Außenraum 10 ein und durchströmt als Primärstrom diesen Außenraum 10 im wesentlichen entlang der Hohlfasermembranen 2 in Richtung auf die Auslaßeinrichtung 11. Aufgrund des entstehenden Druckgefälles tritt ein Permeatstrom im wesentlichen über die gesamte Erstreckung des Hohlfasermembranbündels durch die semipermeablen, porösen Wände der Hohlfasermembranen 2 in deren Lumina 9 ein. An dem die Wände der Hohlfasermembranen 2 durchströmenden Permeatstrom erfolgt die stoffspezifische Behandlung. Der behandelte Permeatstrom verläßt die Lumina 9 über die Öffnungen am zweiten Ende 5 der Hohlfasermembranen 2 und vereinigt sich dort im Außenraum 10 mit dem Primärstrom, bevor der aus Primärstrom und Permeat vereinigte Strom als behandeltes Fluid 12 über die Auslaßeinrichtung 11 aus dem Gehäuse 1 ausgeleitet wird.

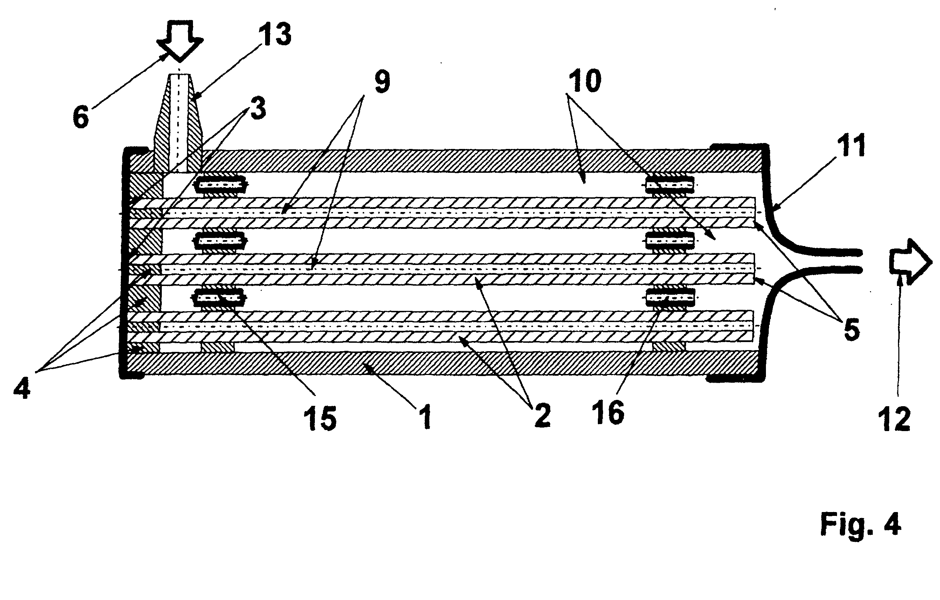

Bei einem Membranmodul der in Figur 3 gezeigten Art, bei dem die in einem Bündel angeordneten Hohlfasermembranen außenseitig vom Primärstrom umströmt werden, ist es wichtig, für eine gleichmäßige Verteilung des zu behandelnden Fluid über dem Bündelquerschnitt zu sorgen. Dies kann prinzipiell dadurch erreicht werden, daß der bei der Durchströmung des Außenraums bzw. des durch den Außenraum ausgebildeten Kanalsystems entstehende Strömungswiderstand ausreichend hoch ist, etwa auch durch Einbringen von Elementen in diesen Außenraum, die für eine Erhöhung des Strömungswiderstandes sorgen. In Figur 4 sind - in Strömungsrichtung zwischen Einlaßeinrichtung 13 und Auslaßeinrichtung 11 gesehen - röhrchen- bzw. kapillarförmige Elemente 15 in den Außenraum 10 um die Hohlfasermembranen 2 eingebracht, die für eine Erhöhung des Strömungswiderstandes im der Einlaßeinrichtung 13 benachbarten Teil des Außenraums 10 sorgen und so eine Vergleichmäßigung der Verteilung des Primärstroms bewirken.

Bei dem in Figur 4 dargestellten Membranmodul sind darüberhinaus im Bereich der nicht-eingebetteten Enden 5 der Hohlfasermembranen 2 weitere strömungswiderstandserhöhende Elemente 16 in den Außenraum 10 eingebracht. Mittels dieser, im gezeigten Beispiel ebenfalls röhrchen- oder kapillarförmig ausgeführten Elemente 16 läßt sich der Strömungswiderstand, der für den Primärstrom bei der Durchströmung des Außenraums resultiert, erhöhen und auf diese Weise der Permeatstrom durch die Wände der Hohlfasermembranen vergrößern.

Anstelle röhrchen- bzw. kapillarförmig ausgeführter Elemente können zur Erzielung ähnlicher Effekte z.B. in den in Figur 4 gezeigten Bereichen entlang der Hohlfasermembranen andere strömungswiderstandserhöhende Elemente eingesetzt werden, etwa in Form entsprechend ausgestalteter fluiddurchlässiger Abstandshalter oder in Form fluiddurchlässiger Vliese, die beipielsweise bei Hohlfasermembranbündeln, die aus spiralförmig um einen Kern gewickelten Hohlfasermembranmatten ausgebildet sind, streifenförmig zwischen die beim Wickeln entstehenden Lagen gelegt werden.

Ähnliche Effekte, wie sie durch den Einsatz der strömungswiderstandserhöhenden Elemente 16 erreicht werden können, lassen sich bei Membranmodulen, bei denen Hohlfasermembranen 2 außenseitig vom Primärstrom umströmt werden, auch durch eine entsprechende Ausgestaltung des Innenquerschnitts des Gehäuses 1 erzielen. Durch Verjüngung des Gehäusequerschnitts im Bereich der Hohlfasermembranen in Richtung auf das nicht-eingebettete Ende 5 der Hohlfasermembranen 2 wird der Abstand zwischen den zum Bündel zusammengefaßten Hohlfasermembranen an den nicht-eingebetteten Enden 5 gegenüber dem Abstand im Bereich der Vergußmasse reduziert. Dadurch wird der Strömungswiderstand in Richtung auf die Enden 5 erhöht, und es resultiert eine Vergrößerung des Permeatstroms.

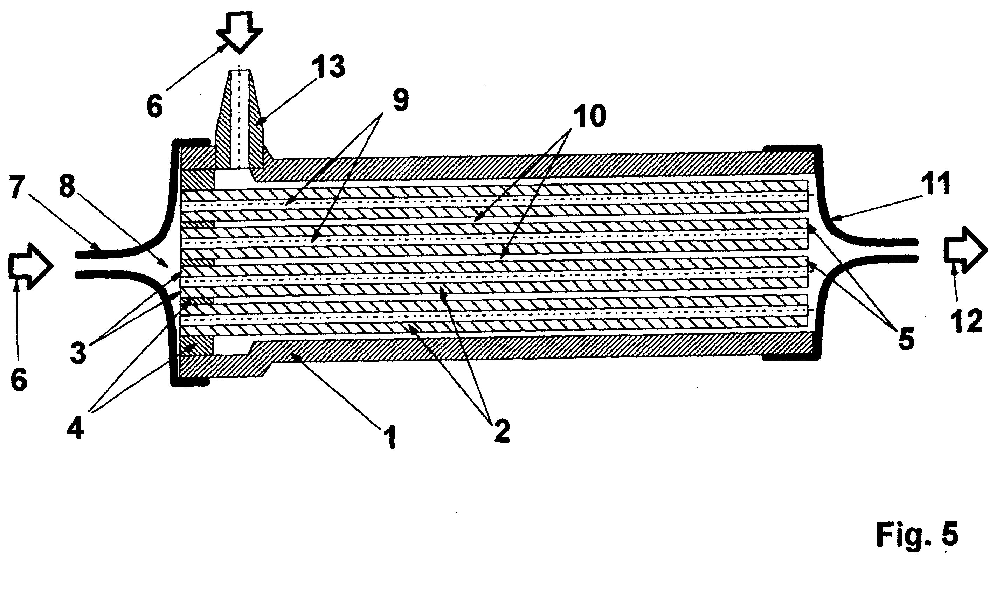

Figur 5 zeigt einen erfindungsgemäßen Membranmodul, der sowohl eine Einlaßeinrichtung 7 aufweist, die mit einem Verteilerraum 8 und über diesen mit den Lumina 9 der Hohlfasermembranen 2 in Verbindung steht, als auch eine Einlaßeinrichtung 13, die in den die Hohlfasermembranen 2 umgebenden Außenraum 10 mündet und zur Vergußmasse 4 benachbart ist. Bei einer solchen Ausführungsform des erfindungsgemäßen Membranmoduls können verschiedene Fluide im Wechsel als Primärstrom lumenseitig durch die Hohlfasermembranen und außenseitig durch den Außenraum geleitet werden.

Beispielsweise kann zunächst ein zu behandelndes, bestimmte Zielsubstanzen enthaltendes Fluid über die Einlaßeinrichtung 7 als Primärstrom in die Lumina 9 der Hohlfasermembranen 2 eingeleitet werden, wobei die Einlaßeinrichtung 13 verschlossen bleibt. In der bereits beschreibenen Weise entsteht ein Permeatstrom durch die semipermeablen, porösen Wände der Hohlfasermembranen 2, und es erfolgt eine stoffspezifische Behandlung des Permeatstroms etwa durch Adsorption der Zielsubstanzen in den Hohlfasermembranen 2 und damit eine Beladung der Hohlfasermembranen 2 mit den Zielsubstanzen. Der um die Zielsubstanzen verarmte Permeatstrom wird zusammen mit dem aus den Lumina 9 der Hohlfasermembranen 2 austretenden Primärstrom über die Auslaßeinrichtung 11 aus dem Gehäuse 1 abgeleitet.

Nach Erreichen der Kapazität der Hohlfasermembranen im Hinblick auf die adsorbierbare Menge an Zielsubstanzen können die Zielsubstanzen auf einfache Weise wieder aus den Hohlfasermembranen eluiert werden, indem eine Elutionsflüssigkeit über die Einlaßeinrichtung 13 in den Außenraum 10 eingeleitet wird und die Elutionsflüssigkeit als Primärstrom den Außenaum durchströmt. Während dieses Vorgangs bleibt die Einlaßeinrichtung 7 verschlossen. In ebenfalls bereits beschriebener Weise tritt dann ein Permeatstrom durch die semipermeablen porösen Wände der Hohlfasermembranen 2, allerdings in umgekehrter Richtung als bei der Beladung der Hohlfasermembranen mit den Zielsubstanzen, und es kann problemlos eine Elution der Zielsubstanzen aus den Hohlfasermembranen 2 erfolgen.

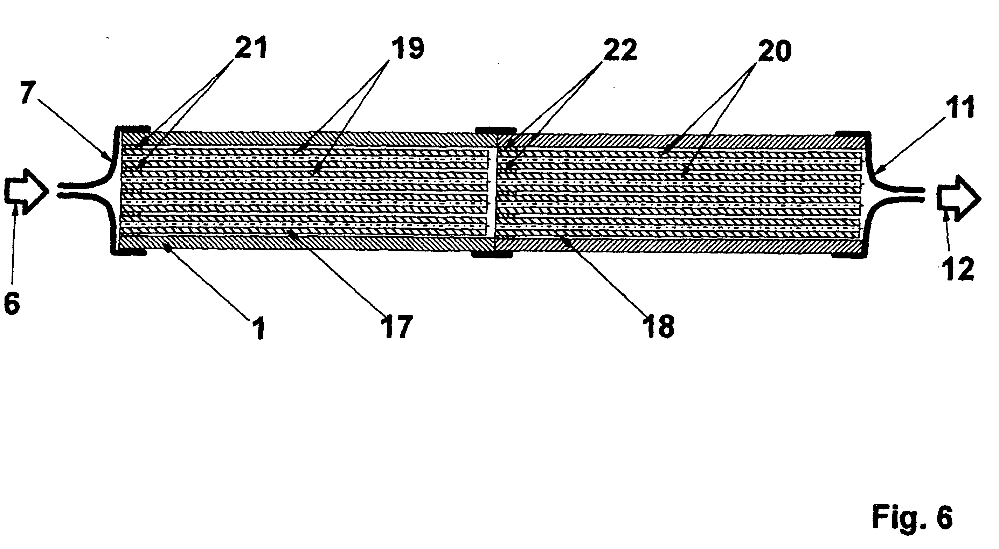

In Figur 6 ist ein erfindungsgemäßer Membranmodul dargestellt, der zwei als Stufen hintereinander angeordnete Hohlfasermembranbündel 17, 18 enthält, deren Hohlfasermembranen 19, 20 jeweils an ihrem einen Ende in Vergußmassen 21,22 eingebettet sind. Das zu behandelnde Fluid 6 wird über die Einlaßeinrichtung 7 in das Gehäuse 1 des Membranmoduls eingeleitet und durchströmt zunächst als Primärstrom lumenseitig die Hohlfasermembranen 19 des ersten Membranbündels 17. Der dabei entstehende Permeatstrom wird in den Wänden der Hohlfasermembranen 19 einer ersten stoffspezifischen Behandlung unterzogen.

Der den Außenraum im Bereich des ersten Membranbündels 17 durchströmende Permeatstrom vereinigt sich im Bereich der nicht-eingebetteten Enden der Hohlfasermembranen 19 des Membranbündels 17 mit dem aus den Lumina der Hohlfasermembranen 19 austretenden Primärstrom, und der so entstandene Strom des einfach behandelten Fluids tritt anschließend wiederum lumenseitig als Primärstrom in die Hohlfasermembranen 20 des zweiten Membranbündels 18 ein.

Hier wiederholen sich die Vorgänge, die im Bereich des ersten Membranbündels 17 stattfanden, und in den Wänden der Hohlfasermembranen 20 des zweiten Bündels 18 erfolgt an dem sie durchströmenden Permeatstrom eine weitere stoffspezifische Behandlung. Der somit zweifach behandelte Fluidstrom 12 wird über die Auslaßeinrichtung 11 aus dem Membranmodul ausgeleitet. Wie ausgeführt, können die in den Hohlfasermembranen der einzelnen Stufen immobilisierten, stoffspezifisch wirkenden Gruppen auch unterschiedlich sein, so daß ein zu behandelndes Fluid beim Durchströmen eines mehrere Stufen enthaltenden Membranmoduls mehrere verschiedene stoffspezifischen Behandlungen erfahren kann.

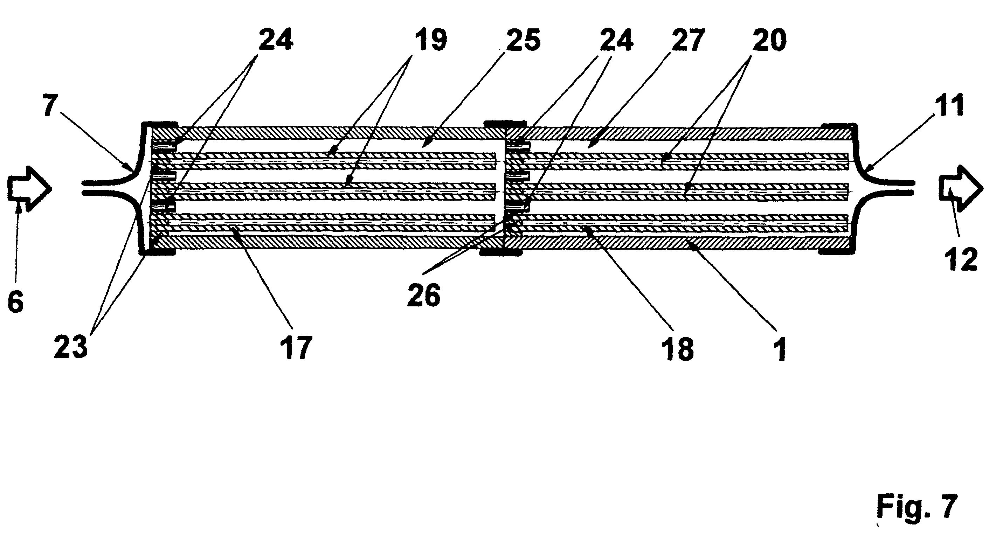

Eine Möglichkeit der Hintereinanderschaltung mehrerer Bündel von Hohlfasermembranen als Stufen bei außenseitiger Umströmung der Hohlfasermembranen durch den Primärstrom ist in Figur 7 dargestellt. Das zu behandelnde Fluid wird - wie bei Beispielen zur lumenseitigen Durchströmung durch den Primärstrom - stirnseitLg, d.h. von den eingebetteten Enden der Hohlfasermembranen her, über die Einlaßeinrichtung 7 in den vor der ersten Stufe angeordneten Verteilerraum 8 geleitet. Der Verteilerraum 8 grenzt an seiner einen Seite an die Vergußmasse 23 an, mittels derer die Hohlfasermembranen 19 des Bündels 17 der ersten Stufe an ihrem der Einlaßeinrichtung zugewandten Ende so eingebettet sind, daß ihre Lumina an diesen Enden verschlossen sind. In diese Vergußmasse 23 sind außerdem fluiddurchlässige Elemente 24 eingebettet, die im dargestellten Fall als Röhrchen oder Kapillaren ausgebildet sind. Über diese fluiddurchlässigen Elemente 24 wird das zu behandelnde Fluid als Primärstrom in den Außenraum 25 um die Hohlfasermembranen 19 des ersten Membranbündels 17 geleitet. Wie beschrieben strömt aufgrund der herrschenden Druckverhältnisse ein Permeatstrom durch die semipermeablen, porösen Wände der Hohlfasermembranen 19 und wird dort einer ersten stoffspezifischen Behandlung unterzogen. Im Bereich der nicht-eingebetteten Enden der Hohlfasermembranen 19 vereinigt sich der Primärstrom mit dem Permeatstrom im Außenraum 25.

Der so entstehende, einer ersten stoffspezifischen Behandlung unterzogene Fluidstrom wird in der zweiten Stufe dem Bündel 18 der Hohlfasermembranen 20 zugeführt. Diese Stufe ist analog zur ersten Stufe ausgeführt. Auch hier weist die Vergußmasse 26 fluidduchlässige Elemente 24 auf, mittels derer das der weiteren stoffspezifischen Behandlung zu unterziehende Fluid in den Außenraum 27 um die Hohlfasermembranen 20 des zweiten Bündels 18 geleitet wird. Die hier stattfindenden Vorgänge entsprechen denjenigen in der ersten Stufe, wobei der Permeatstrom der zweiten Stufe einer weiteren stoffspezifischen Behandlung unterworfen wird. Der dann zweifach behandelte Fluidstrom 12 wird dann über die Auslaßeinrichtung 11 aus dem Membranmodul geleitet.

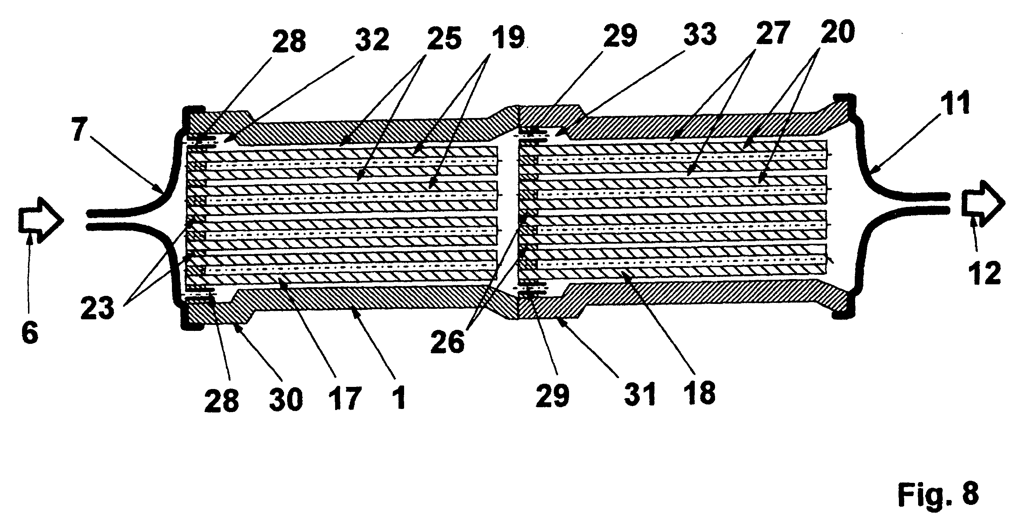

Eine Abwandlung des in Figur 7 dargestellten Membranmoduls mit zwei als Stufen hintereinander angeordneten Hohlfasermembranbündeln 17,18 und außenseitiger Umströmung der Hohlfasermembranen 19,20 durch den Primärstrom ist in Figur 8 dargestellt. Bei dem Membranmodul gemäß Figur 8 erfolgt die Einleitung des zu behandelnden Fluids 6 ebenfalls über die Einlaßeinrichtung 7. Der Primärstrom wird dann von der Stirnseite her, d.h. von der Ebene her, die jeweils durch die Vergußmasse 23,26 und die eingebetteten, von der Vergußmasse 23,26 verschlossenen Enden der Hohlfasermembranen 19,20 gebildet wird, in den jeweiligen Außenraum 25,27 um die Hohlfasermembranen geleitet.

Um die eingebetteten Enden der Hohlfasermembranen 19,20 des jeweiligen Bündels 17,18 herum sind ringförmig fluiddurchlässige Elemente 28,29 in die Vergußmassen 23,26 eingebettet, die im gezeigten Beispiel als kurze Röhrchen oder Kapillaren ausgebildet sind und die durch die Vergußmassen 23,26 hindurchtreten. Im Bereich der Vergußmassen 23,26 weist das Gehäuse 1 Erweiterungen 30,31 bezüglich seines Innendurchmessers auf. Hierdurch wird zum einen eine gleichmäßige Zuführung des zu behandelnden Fluids zu den fluiddurchlässigen Elementen 28,29 erreicht. Zum anderen werden durch diese Erweiterungen 30,31 Ringkanäle 32,33 in Strömungsrichtung hinter den Vergußmassen 23,26 ausgebildet, in die die fluiddurchlässigen Elemente 28,29 münden und durch die eine gleichmäßige Verteilung des Primärstroms über den jeweiligen Bündelquerschnitt erreicht wird.

## Patentansprüche

1. Membranmodul zur stoffspezifischen Behandlung eines Fluids, enthaltend
a) ein Gehäuse (1) mit einer Längserstreckung
b) darin im wesentlichen in Richtung der Längserstreckung des Gehäuses (1) angeordnet ein Bündel aus Hohlfasermembranen (2;19,20) mit semipermeabler Wand, die eine poröse Struktur aufweist, wobei jede Hohlfasermembran (2;19,20) ein erstes und ein zweites Ende (3,5) und mindestens ein sich entlang ihrer Längsachse erstreckendes Lumen (9) aufweist, wobei jede Hohlfasermembran lediglich an ihrem ersten Ende (3) mittels einer Vergußmasse (4;21,22;23,26) in das Gehäuse (1) eingebettet und an ihrem zweiten Ende (5) im wesentlichen frei umströmbar ist, und wobei die Hohlfasermembranen (2;19,20) von einem durch die Innenwand des Gehäuses (1) und durch die Vergußmasse (4;21,22;23,26) begrenzten Außenraum (10;25,27) umgeben sind und jeweils eine Innenseite, die ihrem mindestens einen Lumen (9) zugewandt ist, und eine Außenseite, die dem Außenraum (10;25,27) zugewandt ist, aufweisen,
c) mindestens eine Einlaßeinrichtung (7,13) zum Einleiten des zu behandelnden Fluids (6) in das Gehäuse (1) auf lediglich eine der beiden Seiten der Hohlfasermembranen (2;19,20),
d) eine Auslaßeinrichtung (11) zum Ableiten des behandelten Fluids (12) aus dem Gehäuse (1), wobei die Auslaßeinrichtung (11) zum Außenraum (10) um die Hohlfasermembranen (2;19,20) hin geöffnet ist,
**dadurch gekennzeichnet, daß** die Lumina (9) der Hohlfasermembranen (2;19,20) an deren zweiten Ende (5) geöffnet sind und in den Außenraum (10;25,27) münden und wobei an die Membranen eine große Anzahl von funktionellen Gruppen gekoppelt sind, die im Wechselwirkung mit dem die Membran durch Strömenden, zu behandelnden Fluiden treten.

2. Membranmodul nach Anspruch 1, **dadurch gekennzeichnet, daß** die mindestens eine Einlaßeinrichtung (13) in den Außenraum (10) mündet und zur Vergußmasse (4) benachbart ist.

3. Membranmodul nach Anspruch 2, **dadurch gekennzeichnet, daß** die Lumina (9) der Hohlfasermembranen (2) an deren eingebettetem ersten Ende (3) geschlossen sind.

4. Membranmodul nach Anspruch 1, **dadurch gekennzeichnet, daß** die mindestens eine Einlaßeinrichtung (7) mit einem Verteilerraum (8) in Verbindung steht, der stirnseitig zur Vergußmasse (4;21,22;23,26) benachbart ist und durch die Vergußmasse (4;21,22;23,26) räumlich vom Außenraum (10;25,27) getrennt ist.

5. Membranmodul nach Anspruch 4, **dadurch gekennzeichnet, daß** der Verteilerraum (8) mit den Lumina (9) der Hohlfasermembranen (2;19,20) in Verbindung steht, die mit ihrem ersten Ende (3) durch die Vergußmasse (4;21,22) hindurchtreten und an diesem Ende geöffnet sind.

6. Membranmodul nach Anspruch 4, **dadurch gekennzeichnet, daß** der Verteilerraum (8) über in die Vergußmasse eingebrachte Durchlässe (24;28,29) mit dem Außenraum (10;25,27) um die Hohlfasermembranen (2;19,20) in Verbindung steht und daß die Lumina (9) der Hohlfasermembranen (2;19,20) an deren eingebettetem ersten Ende (3) geschlossen sind.

7. Membranmodul nach Anspruch 6, **dadurch gekennzeichnet, daß** es sich bei den Durchlässen (24;28,29) um fluiddurchlässige Elemente handelt.

8. Membranmodul nach Anspruch 7, **dadurch gekennzeichnet, daß** die fluiddurchlässigen Elemente Kapillaren oder Röhrchen sind.

9. Membranmodul nach Anspruch 1, **dadurch gekennzeichnet, daß** mindestens eine Einlaßeinrichtung (13) in den Außenraum (10) mündet und zur Vergußmasse (4) benachbart ist und mindestens eine Einlaßeinrichtung (7) mit einem Verteilerraum (8) in Verbindung steht, der stirnseitig zur Vergußmasse (4) benachbart ist und durch die Vergußmasse (4) räumlich vom Außenraum (10) getrennt ist, und daß dieser Verteilerraum (8) mit den Lumina (9) der Hohlfasermembranen (2) in Verbindung steht, die mit ihrem ersten Ende (3) durch die Vergußmasse (4) hindurchtreten und an diesem Ende geöffnet sind.

10. Membranmodul nach einem oder mehreren der Ansprüche 1 bis 9, **dadurch gekennzeichnet, daß** die Hohlfasermembranen (2;19,20) eines Bündels zueinander durch Abstandshalter auf Abstand gehalten werden.

11. Membranmodul nach Anspruch 10, **dadurch gekennzeichnet, daß** die Hohlfasermembranen (2;19,20) mittels der Abstandshalter in mindestens eine Hohlfasermatte eingebunden sind.

12. Membranmodul nach einem oder mehreren der Ansprüche 1 bis 11, **dadurch gekennzeichnet, daß** im Gehäuse (1) in Richtung der Längserstreckung der Hohlfasermembranen (19,20) mehrere Bündel (17,18) von Hohlfasermembranen (19,20) als Stufen hintereinander angeordnet sind.

13. Membranmodul nach einem oder mehreren der Ansprüche 1 bis 12, **dadurch gekennzeichnet, daß** die Hohlfasermembranen (2;19,20) eine BET-Oberfläche zwischen 2 und 300 m² je cm³ Membranvolumen aufweist.

14. Membranmodul nach Anspruch 13, **dadurch gekennzeichnet, daß** die BET-Oberfläche zwischen 8 und 30 m² je cm³ Membranvolumen liegt.

15. Membranmodul nach einem oder mehreren der Ansprüche 1 bis 14, **dadurch gekennzeichnet, daß** die Hohlfasermembranen (2;19,20) aus Cellulose, Polyamid, Polypropylen, Polysulfon, Polytetrafluorethylen oder Polyvinylidenfluorid oder daraus gewonnenen Modifikationen, Blends, Mischungen oder Copolymeren bestehen.

16. Membranmodul nach einem oder mehreren der Ansprüche 1 bis 15, **dadurch gekennzeichnet, daß** auf und/oder in den Hohlfasermembranen (2;19,20) stoffspezifisch wirkende Gruppen immobilisiert sind.

17. Membranmodul nach Anspruch 16, **dadurch gekennzeichnet, daß** die stoffspezifisch wirkenden Gruppen Liganden zur affinen Trennung von Ligaten aus dem zu behandelnden Fluid sind.

18. Membranmodul nach Anspruch 16, **dadurch gekennzeichnet, daß** die stoffspezifisch wirkenden Gruppen Katalysatoren sind.

19. Verfahren zur stoffspezifischen Behandlung eines Fluids unter Verwendung eines Membranmoduls nach Anspruch 1, wobei die Hohlfasermembranen (2;19,20) jeweils eine Innenseite, die dem mindestens einen Lumen (9) zugewandt ist, sowie eine Außenseite, die dem Außenraum (10;25,27) zugewandt ist, aufweisen, umfassend mindestens die Schritte:
a) Einleiten des zu behandelnden Fluids (6) in das Gehäuse (1),
b) Vorbeileiten des zu behandelnden Fluids (6) als Primärstrom an einer der Seiten der Hohlfasermembranen (2;19,20) derart, daß ein Teil dieses Primärstroms als Permeatstrom über diese eine Seite in die Wand der Hohlfasermembranen (2;19,20) einströmt, durch die Wand zur jeweils anderen Seite hindurchströmt, wobei an dem den Permeatstrom bildenden Teil des zu behandelnden Fluids die stoffspezifische Behandlung des Fluids erfolgt, und anschließend durch die andere Seite aus der Wand herausströmt,
c) Zusammenführen des durch die Wand der Hohlfasermembranen (2;19,20) hindurchgeströmten Permeatstroms nach der stoffspezifischen Behandlung mit dem an der einen Seite der Hohlfasermembranen (2;19,20) strömenden Primärstrom,
d) Ausleiten des aus Primärstrom und Permeatstrom zusammengeführten Strom des behandelten Fluids (12) aus dem Gehäuse (1).

20. Verfahren nach Anspruch 19, **dadurch gekennzeichnet, daß** die Schritte b) und c) mehrfach durchlaufen werden.

21. Verfahren nach Anspruch 20, **dadurch gekennzeichnet, daß** die Behandlung des Fluids in mehreren in Richtung der Längserstreckung der Hohlfasermembranen (2;19,20) räumlich als Stufen hintereinander angeordneten Bündeln (17,18) von Hohlfasermembranen (2;19,20) durchgeführt wird.

22. Verfahren nach Anspruch 21, **dadurch gekennzeichnet, daß** die Anzahl der Stufen zwischen 1 und 100 liegt.

23. Verfahren nach einem oder mehreren der Ansprüche 19 bis 22, **dadurch gekennzeichnet, daß** das zu behandelnde Fluid (6) rezirkuliert wird.

24. Verfahren nach einem oder mehreren der Ansprüche 19 bis 23, **dadurch gekennzeichnet, daß** das zu behandelnde Fluid (6) eine Suspension ist.

25. Verfahren zur Reinigung/Trennung von Ligaten aus einer ligathaltigen Flüssigkeit mittels Affinität, **dadurch gekennzeichnet, daß** Hohlfasermembranen (2;19,20) ausgewählt werden, auf und/oder in denen Liganden für besagte Ligaten immobilisiert sind, und das Verfahren gemäß einem oder mehreren der Ansprüche 19 bis 24 durchgeführt wird.

26. Verfahren zur katalytischen Behandlung von Fluiden, **dadurch gekennzeichnet, daß** Hohlfasermembranen (2;19,20) eingesetzt werden, auf und/oder in denen Katalysatoren immobilisiert sind, und das Verfahren gemäß einem oder mehreren der Ansprüche 19 bis 24 durchgeführt wird.

27. Verwendung des Membranmoduls nach Anspruch 17 zur Trennung/Reinigung von Ligaten aus einer diese Ligaten enthaltenden Flüssigkeit.

28. Verwendung des Membranmoduls nach Anspruch 18 zur Durchführung von katalytischen Reaktionen an in Fluiden enthaltenen Zielsubstanzen.

## Claims

1. Membrane module for substance-specific treatment of a fluid, comprising
a) a housing (1) with a longitudinal extent,
b) therein, arranged substantially in the direction of the longitudinal extent of the housing (1), a bundle of hollow-fiber membranes (2;19,20) with a semi-permeable wall having a porous structure, wherein each hollow-fiber membrane (2;19,20) has first and second ends (3,5) and at least one lumen (9) extending along the longitudinal axis of the membrane, wherein each hollow-fiber membrane is embedded in the housing (1) via a sealing compound (4;21,22;23,26) only at the first end (3) and flow around the second end (5) is substantially unrestricted, and wherein the hollow-fiber membranes (2;19,20) are surrounded by an external space (10;25,27) delimited by the inner wall of the housing (1) and by the sealing compound (4;21,22;23,26), each hollow-fiber membrane having an inside facing its at least one lumen (9) and an outside facing the external space (10;25,27).
c) at least one inlet arrangement (7,13) for introducing the fluid (6) to be treated into the housing (1) on only one of the two sides (inside or outside) of the hollow-fiber membranes (2;19,20),
d) an outlet arrangement (11) for draining the treated fluid (12) from the housing (1), whereby the outlet arrangement (11) is open toward the external space (10) surrounding the hollow-fiber membranes (2;19,20),
**characterized in that** the lumina (9) of the hollow-fiber membranes (2;19,20) are open at their second ends (5) and lead into the external space (10;25,27) and that a large number of functional groups are coupled to the membrane which can interact with the fluids to be treated that flow through the membrane.

2. Membrane module according to Claim 1, **characterized in that** the at least one inlet arrangement (13) leads into the external space (10) and is adjacent to the sealing compound (4).

3. Membrane module according to Claim 2, **characterized in that** the lumina (9) of the hollow-fiber membranes (2) are closed at their embedded first ends (3).

4. Membrane module according to Claim 1, **characterized in that** the at least one inlet arrangement (7) is in communication with a distribution space (8) that is adjacent to the end face of the sealing compound (4;21,22;23,26) and spatially separated from the external space (10;25,27) by the sealing compound (4;21,22;23,26).

5. Membrane module according to Claim 4, **characterized in that** the distribution space (8) is in communication with the lumina (9) of the hollow-fiber membranes (2;19,20), the first ends (3) of which extend through the sealing compound (4;21,22) and are open at this end.

6. Membrane module according to Claim 4, **characterized in that** the distribution space (8) is in communication with the external space (10;25,27) surrounding the hollow-fiber membranes (2;19,20) via passages (24;28,29) inserted into the sealing compound and that the lumina (9) of the hollow-fiber membranes (2;19,20) are closed at their embedded first ends (3).

7. Membrane module according to Claim 6, **characterized in that** the passages (24;28,29) are fluid-permeable elements.

8. Membrane module according to Claim 7, **characterized in that** the fluid-permeable elements are capillaries or tubes.

9. Membrane module according to Claim 1, **characterized in that** at least one inlet arrangement (13) leads into the external space (10) and is adjacent to the sealing compound (4), at least one inlet arrangement (7) is in communication with a distribution space (8) adjacent to the end face of the sealing compound (4) and spatially separated from the external space (10) by the sealing compound (4), and this distribution space (8) is in communication with the lumina (9) of the hollow-fiber membranes (2), the first ends (3) of which extend through the sealing compound (4) and are open at this end.

10. Membrane module according to one or more of Claims 1 to 9, **characterized in that** the hollow-fiber membranes (2;19,20) of a bundle are spaced from each other by spacers.

11. Membrane module according to Claim 10, **characterized in that** the hollow-fiber membranes (2;19,20) are bound via the spacers into at least one hollow-fiber mat.

12. Membrane module according to one or more of Claims 1 to 11, **characterized in that** in the housing (1), in the direction of the longitudinal extent of the hollow-fiber membranes(19,20), a plurality of bundles (17,18) of hollow-fiber membranes (19,20) are arranged as stages in series.

13. Membrane module according to one or more of Claims 1 to 12, **characterized in that** the hollow-fiber membranes (2;19,20) have a BET surface area between 2 and 300 m² per cm³ of membrane volume.

14. Membrane module according to Claim 13, **characterized in that** the BET surface area is between 8 and 30 m² per cm³ of membrane volume.

15. Membrane module according to one or more of Claims 1 to 14, **characterized in that** the hollow-fiber membranes (2;19,20) consist of cellulose, polyamide, polypropylene, polysulfone, polytetrafluoroethylene, or polyvinylidene fluoride, or modifications, blends, mixtures, or copolymers derived therefrom.

16. Membrane module according to one or more of Claims 1 to 15, **characterized in that** substance-specific groups are immobilized on and/or in the hollow-fiber membranes (2;19,20).

17. Membrane module according to Claim 16, **characterized in that** the substance-specific groups are ligands for affinity separation of ligates from the fluid to be treated.

18. Membrane module according to Claim 16, **characterized in that** the substance-specific groups are catalysts.

19. Process for substance-specific treatment of a fluid using a membrane module according to Claim 1, whereby the hollow-fiber membranes (2;19,20) each have an inside facing the at least one lumen (9) and an outside facing the external space (10;25,27), comprising at least the steps of:
a) Introducing the fluid (6) to be treated into the housing (1),
b) Passing the fluid (6) to be treated as a primary stream over one of the sides of the hollow-fiber membranes (2;19,20), such that a portion of this primary stream flows as a permeate stream into the wall of the hollow-fiber membranes (2;19,20) via this one side, through the wall to the respective other side, whereby the substance-specific treatment of the fluid takes place on the portion of the fluid to be treated representing the permeate stream, and then out of the wall through the other side,
c) Combining the permeate stream, after flowing through the wall of the hollow-fiber membranes (2;19,20) and after substance-specific treatment, with the primary stream flowing on the one side of the hollow-fiber membranes (2;19,20).
d) Draining the combined stream of the treated fluid (12), consisting of primary and permeate streams, from the housing (1).

20. Process according to Claim 19, **characterized in that** steps b) and c) are repeated multiple times.

21. Process according to Claim 20, **characterized in that** the treatment of the fluid is conducted in multiple bundles (17,18) of hollow-fiber membranes (2;19,20), the bundles arranged spatially as stages in series in the direction of the longitudinal extent of the hollow-fiber membranes (2;19,20).

22. Process according to Claim 21, **characterized in that** the number of stages is between 1 and 100.

23. Process according to one or more of Claims 19 to 22, **characterized in that** the fluid (6) to be treated is recirculated.

24. Process according to one or more of Claims 19 to 23, **characterized in that** the fluid (6) to be treated is a suspension.

25. Process for cleaning/separating ligates from a ligate-containing liquid by affinity, **characterized in that** hollow-fiber membranes (2;19,20) are selected on and/or in which ligands for said ligates are immobilized, and the process is conducted according to one or more of Claims 19 to 24.

26. Process for catalytic treatment of fluids, **characterized in that** hollow-fiber membranes (2;19,20) are used on and/or in which catalysts are immobilized and the process is conducted according to one or more of Claims 19 to 24.

27. Use of the membrane modules according to Claim 17 for separating/cleaning ligates from a liquid containing these ligates.

28. Use of the membrane module according to Claim 18 for conducting catalytic reactions on target substances contained in fluids.

## Revendications

1. Module de membranes pour le traitement spécifique d'un fluide, comprenant
a) une enveloppe (1) ayant une direction longitudinale,
b) à l'intérieur de cette enveloppe (1), essentiellement dans la direction longitudinale de cette dernière, un faisceau de membranes à fibres creuses (2; 19, 20) ayant une paroi semi-perméable de structure poreuse, chaque membrane à fibres creuses (2; 19, 20) présentant une première et une seconde extrémités (3, 5) et au moins une lumière (9) s'étendant le long de l'axe longitudinal de la membrane, chaque membrane à fibres creuses étant scellée dans l'enveloppe (1) uniquement à sa première extrémité (3) à l'aide d'une masse de scellement (4; 21, 22; 23, 26) et permettant un écoulement essentiellement libre du fluide autour d'elle à sa seconde extrémité (5), les membranes à fibres creuses (2; 19, 20) étant entourées d'un espace extérieur (10; 25, 27) délimité par la paroi intérieure de l'enveloppe (1) et par la masse de scellement (4; 21, 22; 23, 26) et présentant chacune un côté intérieur tourné vers ladite au moins une lumière (9) et un côté extérieur tourné vers ledit espace extérieur (10; 25, 27),
c) au moins un dispositif d'entrée (7, 13) pour l'admission du fluide (6) à traiter dans l'enveloppe (1) sur un seulement des deux côtés des membranes à fibres creuses (2; 19, 20),
d) un dispositif de sortie (11) pour l'évacuation du fluide (12) traité de l'enveloppe (1), le dispositif de sortie (11) étant ouvert vers l'espace extérieur (10) autour des membranes à fibres creuses (2; 19, 20),
**caractérisé par le fait que** les lumières (9) des membranes à fibres creuses (2; 19, 20), à la seconde extrémité (5) de ces dernières, sont ouvertes et débouchent dans l'espace extérieur (10; 25, 27), un grand nombre de groupes fonctionnels qui entrent en interaction avec les fluides à traiter s'écoulant à travers la membrane, étant couplés aux membranes.

2. Module de membranes suivant la revendication 1, **caractérisé par le fait que** ledit dispositif d'entrée (13) au nombre d'au moins un débouche dans l'espace extérieur (10) et est voisin de la masse de scellement (4).

3. Module de membranes suivant la revendication 2, **caractérisé par le fait que** les lumières (9) des membranes à fibres creuses (2) sont fermées à la première extrémité (3) scellée de ces dernières.

4. Module de membranes suivant la revendication 1, **caractérisé par le fait que** ledit dispositif d'entrée (7) au nombre d'au moins un se trouve en communication avec un espace distributeur (8) qui côté frontal est voisin de la masse de scellement (4; 21, 22; 23, 26) et est séparé de l'espace extérieur (10; 25, 27) par la masse de scellement (4; 21, 22; 23, 26).

5. Module de membranes suivant la revendication 4, **caractérisé par le fait que** l'espace distributeur (8) se trouve en communication avec les lumières (9) des membranes à fibres creuses (2; 19, 20) dont la première extrémité (3) traverse la masse de scellement (4; 21, 22) et qui sont ouvertes à cette extrémité.

6. Module de membranes suivant la revendication 4, **caractérisé par le fait que** l'espace distributeur (8) se trouve en communication avec l'espace extérieur (10; 25, 27) autour des membranes à fibres creuses (2; 19, 20) à travers des passages (24; 28, 29) pratiqués dans la masse de scellement et que les lumières (9) des membranes à fibres creuses (2; 19, 20) sont fermées à la première extrémité (3) scellée de ces dernières.

7. Module de membranes suivant la revendication 6, **caractérisé par le fait que** les passages (24; 28, 29) sont des éléments perméables au fluide.

8. Module de membranes suivant la revendication 7, **caractérisé par le fait que** les éléments perméables au fluide sont des capillaires ou tubes.

9. Module de membranes suivant la revendication 1, **caractérisé par le fait qu'**au moins un dispositif d'entrée (13) débouche dans l'espace extérieur (10) et est voisin de la masse de scellement (4) et au moins dispositif d'entrée (7) se trouve en communication avec un espace distributeur (8) qui côté frontal est voisin de la masse de scellement (4) et est séparé de l'espace extérieur (10) par la masse de scellement (4), et que cet espace distributeur (8) se trouve en communication avec les lumières (9) des membranes à fibres creuses (2) dont la première extrémité (3) traverse la masse de scellement (4) et qui sont ouvertes à cette extrémité.

10. Module de membranes suivant une ou plusieurs des revendications 1 à 9, **caractérisé par le fait que** les membranes à fibres creuses (2; 19, 20) d'un faisceau sont maintenues à distance réciproque par des espaceurs.

11. Module de membranes suivant la revendication 10, **caractérisé par le fait que** les membranes à fibres creuses (2; 19, 20) sont liées à l'aide des espaceurs dans au moins une nappe de fibres creuses.

12. Module de membranes suivant une ou plusieurs des revendications 1 à 11, **caractérisé par le fait que** plusieurs faisceaux (17, 18) de membranes à fibres creuses (19, 20) sont disposés dans l'enveloppe (1) en étages les uns derrière les autres dans la direction longitudinale des membranes à fibres creuses (19, 20).

13. Module de membranes suivant une ou plusieurs des revendications 1 à 12, **caractérisé par le fait que** les membranes à fibres creuses (2; 19, 20) présentent une surface BET comprise entre 2 et 300 m² par cm³ de volume de membranes.

14. Module de membranes suivant la revendication 13,
**caractérisé par le fait que** la surface BET est comprise entre 8 et 30 m² par cm³ de volume de membranes.

15. Module de membranes suivant une ou plusieurs des revendications 1 à 14, **caractérisé par le fait que** les membranes à fibres creuses (2; 19, 20) sont constituées de cellulose, polyamide, polypropylène, polysulfone, polytétrafluoréthylène ou poly(fluorure de vinylydène) ou de variantes modifiées, d'alliages, de mélanges ou de copolymères de tels polymères.

16. Module de membranes suivant une ou plusieurs des revendications 1 à 15, **caractérisé par le fait que** des groupes à action spécifique sont immobilisés sur et/ou dans les membranes à fibres creuses (2; 19, 20).

17. Module de membranes suivant la revendication 16, **caractérisé par le fait que** les groupes à action spécifique sont des ligands pour la séparation par affinité de partenaires de liaison dans un fluide à traiter.

18. Module de membranes suivant la revendication 16, **caractérisé par le fait que** les groupes à action spécifique sont des catalyseurs.

19. Procédé pour le traitement spécifique d'un fluide avec utilisation d'un module de membranes suivant la revendication 1, les membranes à fibres creuses (2; 19, 20) présentant chacune un côté intérieur tourné vers la au moins une lumière (9) et un côté extérieur tourné vers l'espace extérieur (10; 25, 27), comprenant au moins les étapes suivant lesquelles:
a) on introduit dans l'enveloppe (1) le fluide (6) à traiter,
b) on fait s'écouler le fluide (6) à traiter en tant que flux primaire sur un premier des côtés des membranes à fibres creuses (2; 19, 20) de manière qu'une partie de ce flux primaire entre en tant que flux de perméat depuis ce premier côté dans la paroi des membranes à fibres creuses (2; 19, 20), traverse la paroi vers le second des côtés, le traitement spécifique du fluide ayant lieu sur la partie du fluide à traiter constituant le flux de perméat, et quitte ensuite la paroi sur le second côté,
c) on réunit le flux de perméat ayant traversé la paroi des membranes à fibres creuses (2; 19, 20), après le traitement spécifique, avec le flux primaire s'écoulant sur ledit premier côté des membranes à fibres creuses (2; 19, 20),
d) on fait sortir de l'enveloppe (1) le flux de fluide (12) traité réuni à partir du flux primaire et du flux de perméat.

20. Procédé suivant la revendication 19, **caractérisé par le fait qu'**on effectue plusieurs fois les étapes b) et c).

21. Procédé suivant la revendication 20, **caractérisé par le fait qu'**on effectue le traitement du fluide dans plusieurs faisceaux (17, 18) de membranes à fibres creuses (2; 19, 20) disposés en étages successifs dans la direction longitudinale des membranes à fibres creuses (2; 19, 20).

22. Procédé suivant la revendication 21, **caractérisé par le fait que** le nombre des étages est compris entre 1 et 100.

23. Procédé suivant une ou plusieurs des revendications 19 à 22, **caractérisé par le fait qu'**on fait recirculer le fluide (6) à traiter.

24. Procédé suivant une ou plusieurs des revendications 19 à 23, **caractérisé par le fait que** le fluide (6) à traiter est une suspension.

25. Procédé pour la purification/séparation par affinité de partenaires de liaison dans un liquide contenant des partenaires de liaison,
**caractérisé par le fait qu'**on sélectionne des membranes à fibres creuses (2; 19, 20) sur et/dans lesquelles des ligands pour lesdits partenaires de liaison sont immobilisés, et qu'on met en oeuvre le procédé suivant une ou plusieurs des revendications 19 à 24.

26. Procédé pour le traitement catalytique de fluides, **caractérisé par le fait qu'**on utilise des membranes à fibres creuses (2; 19, 20) sur et/dans lesquelles des catalyseurs sont immobilisés, et qu'on met en oeuvre le procédé suivant une ou plusieurs des revendications 19 à 24.

27. Utilisation du module de membranes suivant la revendication 17 pour la séparation/purification de partenaires de liaison dans un liquide contenant lesdits partenaires de liaison.

28. Utilisation du module de membranes suivant la revendication 18 pour la mise en oeuvre de réactions catalytiques sur des substances-cibles contenues dans des fluides.
